# EUROPEAN PATENT SPECIFICATION

(11) **EP 4 511 431 B1**
(45) Date of publication and mention of the grant of the patent: **24.12.2025**
(21) Application number: 23720566.1
(22) Date of filing: 18.04.2023
(51) Int. Cl.: C09D 167/08

(54) **AQUEOUS WOOD COATING COMPOSITIONS**
WÄSSRIGE HOLZBESCHICHTUNGSZUSAMMENSETZUNGEN
COMPOSITIONS AQUEUSES DE REVÊTEMENT DU BOIS

(30) Priority: 19.04.2022 BE 202205287; 08.02.2023 EP 23155559
(43) Date of publication of application: 26.02.2025
(73) Proprietor: Muylle-Facon, 8870 Izegem (BE)
(72) Inventor: VAN DER HEIJDEN, Sam, 9100 Sint-Niklaas (BE); PAUWELYN, Sebastiaan, 8940 Geluwe (BE); ZUTTERMAN, Deborah, 8210 Zedelgem (BE); VERDUYN, Arne, 8560 Moorslede (BE)
(74) Representative: Gevers Patents
(86) International application number: PCT/EP2023/059948
(87) International publication number: WO 2023/202995

(56) References cited:
- US-A1- 2011 217 478
- US-B1- 6 627 700
- KÜNNIGER TINA ET AL: "Nanofibrillated cellulose in wood coatings: viscoelastic properties of free composite films", JOURNAL OF MATERIAL SCIENCE, KLUWER ACADEMIC PUBLISHERS, DORDRECHT, vol. 52, no. 17, 15 May 2017 (2017-05-15), pages 10237 - 10249, XP036254855, ISSN: 0022-2461, [retrieved on 20170515], DOI: 10.1007/S10853-017-1193-4

## Description

### FIELD OF THE INVENTION

The present invention relates to aqueous wood coating compositions for the preservation and the protection of wood products, in particular exterior wood products, providing a high stability against UV radiation, while maintaining good mechanical properties in terms of hardness, and good workability in terms of wet edge time. The invention further relates to methods for manufacturing of the same, to methods for treating wood products wherein said wood products are treated with the aqueous wood coating compositions, and to coated layers obtained by said methods for treating wood products wherein said wood products are treated with the aqueous wood coating compositions.

### BACKGROUND OF THE INVENTION

Wood, as a renewable, natural hybrid composite material made of biopolymers such as cellulose, lignin and hemicelluloses, represents a versatile, sustainable, workable and widely exploited renewable resource for indoor and outdoor applications such as building, construction, and living. In addition to its many desirable properties, such as including an attractive appearance, good strength, low density, and good insulating properties, wood is also characterized by more vulnerable properties such as hygroscopicity, flammability, susceptibility of biological attack, and wood surface degradation due to weathering.

Like every material, certainly nowadays, wood is expected to have long-term durability and to retain its original appearance over time. However, one of the major disadvantages of wood is the deterioration of its wood surface when being exposed outdoors, also known as weathering. In general, weathering can be defined as the slow degradation of the wood surface that occurs through the combined effect of being exposed to sunlight (hence under the influence of ultraviolet radiation), water, oxygen, temperature, and atmospheric pollution. Colour change is usually the first sign of ongoing complex chemical reactions on the surface of wood being exposed to weather, specifically initiated by solar radiation, in particular the ultraviolet (UV) part of the spectrum. It is known that UV radiation with its high amount of energy can cause the breakdown of chemical bonds in the polymeric molecules of wood via initiating photochemical reactions leading to the radical induced depolymerisation of both lignin and cellulosic polymers in the wood cell wall. Chemically, the phenolic hydroxyl groups in lignin react with UV radiation to subsequently produce phenoxy radicals, which may further react with oxygen to form various quinoid structures which are considered responsible for the yellowing of wood. In time, the photodegraded lignin portions are then leached from the wood surface, turning said surfaces grey. Furthermore, in addition to colour change, the changes in the wood surface texture are the most visible consequence of wood weathering, for instance resulting in a rough wood surface and weight loss via the leaching of products resulting from photodegradation and hydrolysis, the washing away of loosened cellulose fibres, cracking, delamination, finally followed by the destruction of the wood surface.

Although weathering is primarily a surface phenomenon, it is an important aspect for wood products as it affects their overall appearance, service life, and wood coating performance. Hence, not surprisingly, significant research is directed to the development of weathering protection methods to reduce the maintenance requirements for wood exposed outdoors. Indeed, literature describes various existing methodologies of protecting wood surfaces against weathering such as including surface treatments of wood with photostabilizers, protection with wood coatings, the chemical modification of wood through reaction with acetic anhydride or benzoyl chloride, the thermal modification of wood etc. Another possibility of wood protection is the use of pigmented coatings, wherein the pigments reflect the UV radiation. However, in these specific cases the natural colour of the wood is changed upon the presence of certain amounts of pigments and consequently, this strategy may not be suitable for transparent wood coatings, i.e. wood coatings that contain little to no pigments, since in these cases the preservation of the natural appearance of the wood is desired and targeted.

Photostabilizers are additives used to prevent the photodegradation of wood. These photostabilizers are especially used for improving the performance of transparent wood coatings that contain little to no pigments. The photostabilizers used to protect the wood and improve the performance of (transparent) wood coatings are UV absorbers and radical scavengers. These UV absorbers can be organic or inorganic in nature. The most commonly applied and used inorganic UV absorbers are TiO₂, ZnO, CeO₂, and iron oxides. Despite their reasonable properties for protecting wood and wood coatings from harmful UV radiation, these inorganic UV absorbers tend to significantly change the colour of the coating to the wood product, especially when they are contained in the wood coating compositions in high concentrations. Although inorganic UV absorbers being incorporated in the form of inorganic nanoparticles in theory lead to less significant colour changes, in practice however these inorganic nanoparticles are hard to homogeneously disperse in aqueous systems. As a consequence, these inorganic nanoparticles tend to agglomerate thereby again resulting in colour changes and/or reduction in mechanical strength of the resulting wood coatings. On the other hand, applicable organic UV absorbers for use in wood coating compositions to protect wood and wood coatings from harmful UV radiation usually, and mostly, have a benzophenone, a benzotriazole, a triazine, or an oxanilide core moiety. Due to their chemical structure, these organic UV absorbers absorb energy from incoming UV radiation and dissipate it as heat through a reversible chemical rearrangement analogue to "keto-enol" tautomerism. In this way, the common way to safeguard wood from weathering is to apply one or more coatings to the wood surface in order to shield said surface from the two main causes of the natural weathering process, UV radiation and moisture, while maintaining its appearance. Indeed, UV absorbers prevent the degradation of both wood coatings and wood substrates by filtering out the harmful UV radiation before subsequent photochemical reactions can take place.

Particularly, hydrophobic, i.e. non-polar, organic UV absorbers are well known and frequently used additives to protect (wood) coatings from (photo)degradation, especially with respect to outdoor weathering. In this view, most studies and patent rights related to the preservation and the protection of wood and wood products derived thereof are primarily focused on the application of wood coatings, whereby the main challenge is to determine the balance among on the one hand preserving the natural appearance of wood and protecting its wood surface, and on the other hand the increasingly stringent environmental regulations related to (wood) substrate coating compositions. As a consequence of the regulatory pressure to reduce solvent emissions, there is a high growth rate of compliant technologies regarding waterborne wood coatings having a low VOC or being VOC free. However, in principle, it is highly desired that a change from conventional solventborne to waterborne technologies does not compromise or affect the protective function of the wood coatings. In general, existing products or raw materials which constitute hydrophobic substances need to be converted into product forms that enable easy incorporation and unproblematic dispersion into waterborne wood coatings. For example, US 6,627,700 B1 discloses a low-VOC aqueous dispersion of an acrylate-modified alkyd resin that can be applied as an aqueous coating composition to wood surfaces to be coated, wherein an alkyd resin was modified with olefinically unsaturated monomers to enable the preparation of said aqueous dispersion. Furthermore, unlike in solventborne wood coatings, in waterborne wood coatings many of the well-established non-polar organic UV absorbers are difficult to incorporate due to insolubility and/or incompatibility with the nature of the aqueous wood coating composition. Depending on the type of aqueous wood coating and the type of non-polar organic UV absorber, it may be impossible to generate a stable uniform mixture, or it may occur that the initially homogeneous aqueous wood coating compositions show instability upon storage leading to separation of the non-polar organic UV absorbers and/or other components. Therefore, typical undesired phenomena such as floating, sedimentation, serum formation, gelation, (re)agglomeration, droplet formation etc. may not only occur during storage but also in the applied wood coating, i.e. the coated layer, after drying. Another difficulty is to ensure a homogeneous distribution of the non-polar organic UV absorbers throughout the applied wood coating, in particular at high loadings. It goes without saying that such phenomena caused by the incompatibility of the non-polar organic UV absorbers are detrimental for the overall performance of a wood coating. Accordingly, several attempts have been made in literature to overcome these incompatibility problems.

For instance, non-polar organic UV absorbers have been chemically modified with polar functional groups in order to enhance their water solubility/compatibility and thus to provide UV absorbers with self-emulsifying properties in water. However, this approach has proven to have the disadvantage that the chemical modification is usually complex, rather expensive, and the surfactant-like behaviour of polar-modified UV absorbers can cause environmental problems as well as a lower photo performance due to migration, leaching, and washing out of these polar-modified UV absorbers under humid conditions and outdoor weathering. These polar-modified UV absorbers typically increase the water sensitivity of the wood coating composition applied to wood products and because of their limited photo performance and high leachability, in general a long-term outdoor protection is not provided to said wood products.

One further strategy to more or less effectively incorporate non-polar organic UV absorbers into aqueous wood coatings as concentrated stable aqueous emulsions or dispersions is the use of relatively high accompanying amounts of emulsifiers or surfactants, typically within the range of more than 10 - 20 % emulsifier or surfactant relative to the non-polar UV absorber. However, the incorporation of these relatively high accompanying mounts of emulsifiers or surfactants can increase the water sensitivity of the aqueous wood coating composition applied to wood products. Additionally, the incorporation of these relatively high accompanying amounts of emulsifiers or surfactants negatively influences other mechanical properties of said composition such as for example its adhesion to the wood product, or the hardness of the coated layer to the wood product.

Another strategy to render non-polar organic UV absorbers (more) compatible within aqueous coating compositions, especially traditional water based acrylic paints, is directed to the use of the novel encapsulation additive technology (so-called NEAT). NEAT is based on an encapsulation technique wherein non-polar organic UV absorbers are essentially dissolved in an acrylic copolymer matrix without any further need for emulsifying and/or dispersing aids. Non-limiting examples of such commercially available pre-encapsulated non-polar organic UV absorbers are the Tinuvin^{®} DW series commercially available from BASF, Germany (for example Tinuvin^{®} 477-DW). However, these types of pre-encapsulated non-polar organic UV absorbers are significantly more expensive, they are typically only available as aqueous dispersions with low active content (typically 20 wt. %) , and there always remains a risk of impairing one or more mechanical properties of the resulting coated layer to the wood product as mentioned above.

In view of all the above, there remains a continuing need for improved aqueous wood coating compositions for the preservation and the protection of wood products, in particular exterior wood products, said improved aqueous wood coating compositions having an increased stability against UV radiation, while maintaining good mechanical properties in terms of hardness, and good workability in terms of wet edge time.

### SUMMARY OF THE INVENTION

The inventors have now surprisingly found that it is possible to provide an improved aqueous wood coating composition fulfilling the above-mentioned needs.

Thus, there is now provided an aqueous wood coating composition [composition (C), herein after] comprising, relative to the total dry weight of the composition (C):
- from 40.00 to 80.00 % by weight [wt. %, herein after] of at least one modified alkyd resin [compound (A), herein after], wherein the compound (A) has a Gouge hardness of at least F as measured according to the standard ASTM D3363-20;
- at least one modified vegetable oil [compound (V), herein after], in which the vegetable oil is selected from the group consisting of linseed oil, sunflower oil, tung oil, safflower oil, soybean oil, poppy seed oil, tall oil, corn oil, rice germ oil, cottonseed oil, fish oil, herring oil, grape seed oil, flaxseed oil, chia oil, oiticica oil, walnut oil, camelina oil, hemp seed oil, and perilla oil, and wherein the compound (V) is present in an amount as determined by a dry weight ratio of compound (V) to compound (A) ranging from 0.10 to 0.35;
- from 1.00 to 10.00 wt. % of at least one cellulose compound chosen among microfibrillated cellulose (MFC) or cellulose nanocrystal (CNC); and
- from 3.00 to 25.00 wt. % of at least one liquid non-polar organic UV absorber.

In another aspect, the present invention further provides a method for the manufacturing of the composition (C), as detailed above.

In another aspect, the present invention further provides a method for the treatment of a surface or at least part of a surface of a wood product wherein said wood product is treated with the composition (C), as detailed above.

In another aspect, the present invention further provides a coated layer obtained by the method for the treatment of the surface or at least part of the surface of the wood product wherein said wood product is treated with the composition (C), as detailed above.

### DETAILED DESCRIPTION

### Composition (C)

Within the context of the present invention, the term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that by using at least one modified alkyd resin, as detailed above, in combination with at least one cellulose compound, as detailed above, in a composition (C), as detailed above, an amount of said at least one modified alkyd resin can now be replaced by an amount of at least one modified vegetable oil, as detailed above, whereby the amount of the at least one modified vegetable oil fulfills a defined dry weight ratio of the at least one modified vegetable oil to the at least one modified alkyd resin, and whereby said amount of the at least one modified vegetable oil in addition synergistically interacts with the at least one cellulose compound which is comprised in the composition (C), thereby allowing the composition (C) to successfully incorporate high amounts of at least one liquid non-polar organic UV absorber resulting in the composition (C) now having an increased stability against UV radiation, while maintaining good mechanical properties in terms of hardness, and good workability in terms of wet edge time, as demonstrated in the experimental section. In particular, the inventors have surprisingly found that, despite the presence of high amounts of the at least one liquid non-polar organic UV absorber in the composition (C), said composition (C) first of all remained stable against any phase separation over time upon standing. Furthermore, no segregation, phase separation, migration, or droplet formation occurred within coated layers comprising said composition (C), as demonstrated in the experimental section.

Within the context of the present invention, the expressions "at least one modified alkyd resin", "at least one modified vegetable oil", "at least one cellulose compound", and "at least one liquid non-polar organic UV absorber" are intended to denote one or more than one modified alkyd resin, one or more than one modified vegetable oil, one or more than one cellulose compound, and one or more than one liquid non-polar organic UV absorber. Mixtures of modified alkyd resins, mixtures of modified vegetable oils, mixtures of cellulose compounds, and/or mixtures of liquid non-polar organic UV absorbers can also be used for the purpose of the invention, respectively.

In the rest of the text, the expressions "modified alkyd resin", "modified vegetable oil", "cellulose compound", and "liquid non-polar organic UV absorber" are understood, for the purposes of the present invention, both in the plural and in the singular form, that is to say the composition (C) of the present invention may comprise one or more than one modified alkyd resin, one or more than one modified vegetable oil, one or more than one cellulose compound, and/or one or more than one liquid non-polar organic UV absorber, respectively.

As said above, the composition (C), as detailed above, comprises, relative to the total dry weight of the composition (C), from 40.00 to 80.00 wt. % of at least one modified alkyd resin [compound (A), herein after], wherein the compound (A) has a Gouge hardness of at least F as measured according to the standard ASTM D3363-20.

Preferably, the compound (A) has a Gouge hardness of at least H as measured according to the standard ASTM D3363-20.

Within the context of the present invention, the compound (A) is a modified alkyd resin, wherein said modified alkyd resin is obtained via (chemical) modification of an alkyd resin, for example via modification of the alkyd resin with one or more polyurethanes and/or acrylics, in order to fulfill the requirement of the compound (A) having a Gouge hardness of at least F, preferably at least H, as measured according to the standard ASTM D3363-20. As non-limiting examples of suitable compounds (A), mention may be made of a polyurethane modified alkyd resin, an acrylic modified alkyd resin, and an acrylic modified polyurethane-alkyd resin.

Within the context of the present invention, the Gouge hardness of the compound (A) as measured according to the standard ASTM D3363-20 is defined by the hardest pencil that will leave a coated layer of the compound (A) uncut for a stroke length distance of at least 3.2 mm (1/8 inch). It is understood that the compound (A) having a Gouge hardness of at least F, preferably at least H, as measured according to the standard ASTM D3363-20 means that the compound (A) has a Gouge hardness of at least F, preferably at least H, when measured on a coated layer according to the standard ASTM D3363-20 wherein said coated layer has a thickness from 20 to 30 micron after being dried during 30 days at a temperature of 20 °C and a relative humidity of 50 %, and wherein said coated layer consists of the compound (A), as further detailed in the experimental section.

Within the context of the present invention, the expression "from 40.00 to 80.00 weight percentage [wt. %, herein after] of at least one modified alkyd resin" refers either to the amount of modified alkyd resin when the composition (C) contains only one modified alkyd resin, or to the sum of the amounts of modified alkyd resin when the composition (C) contains more than one modified alkyd resin. This being said, it means that it is necessary that, when more than one modified alkyd resin is present, then it is the sum of the amounts of each of said modified alkyd resin that ranges from 40.00 to 80.00 wt. %, relative to the total dry weight of the composition (C).

Within the context of the present invention, the "alkyd resin" component of the compound (A), as detailed above, is intended to denote thermosetting polymers, chemically similar to polyester resins, obtained by subjecting a raw material composition comprising at least one polycarboxylic acid component, or the corresponding anhydrides of said at least one polycarboxylic acid component where they exist, [component (A), herein after], at least one polyalcohol component [component (B), herein after], and at least one monocarboxylic acid component, or the corresponding triglyceride of said at least one monocarboxylic acid component, [component (D), herein after] to one or more esterification and/or transesterification reactions.

The classification of alkyd resins is based on the nature of the component (D). Alkyd resins can be broadly classified into drying and non-drying types depending on the ability of their films to dry by air oxidation, i.e. autoxidative drying. This drying ability is derived from polyunsaturated components (D) in the alkyd resin composition. If drying oils, such as tung oil, or fatty acids thereof, are the sources of the component (D) for the alkyd resin, said alkyd resin belongs to the drying type. On the other hand, if non-drying oils, such as coconut oil, or fatty acids thereof, are the sources of the component (D) for the alkyd resin, said alkyd resin belongs to the non-drying type. The choice of the fatty acid residues further determines whether the alkyd resin is described as a long oil, medium oil, or short oil alkyd resin. For an alkyd resin, the oil length is defined as the wt. % of oil or triglyceride equivalent, or alternatively, as the wt. % of fatty acids in the finished resin. Alkyd resins are generally classified into four classes by oil length: very long over 70 %, long 56 - 70 %, medium 46 - 55 %, and short below 45 %.

Within the context of the present invention, the alkyd resin component of the compound (A) is a drying alkyd resin. Drying alkyd resin components of the compound (A) suitable for use in the composition (C) of the present invention are those known to the skilled in the art. In particular, drying alkyd resins are polyesters which have been modified by addition of unsaturated fatty acids or the corresponding triglycerides thereof, said unsaturated fatty acids or the corresponding triglycerides thereof preferably being from plant or vegetable oils.

As used herein, the component (A) for preparing the drying alkyd resin component of the compound (A), as detailed above, refers to a carboxylic acid having two or more carboxylic acid functional groups, such as ortho-phthalic acid or anhydride, isophthalic acid, terephthalic acid, 1,2-cyclohexanedicarboxylic acid or anhydride, 1,4-cyclohexanedicarboxylic acid, tetrahydrophthalic acid or anhydride, maleic anhydride, fumaric anhydride, adipic acid, azelaic acid, succinic acid or anhydride, sebacic acid, trimelletic acid or anhydride, itaconic acid, citraconic acid, pyromelletic acid or anhydride, or polymers or mixtures of two or more thereof. Preferably, the component (A), as detailed above, is selected from ortho-phthalic anhydride, isophthalic acid, 1,2-cyclohexanedicarboxylic anhydride, or mixtures of two or more thereof.

As used herein, the component (B) for preparing the drying alkyd resin component of the compound (A), as detailed above, refers to an alcohol having two or more alcohol (i.e. hydroxyl) functional groups such as glycerol, diglycerol, glycol, sugar, sugar alcohol, and combinations thereof. Non-limiting examples of glycols include ethylene glycol, diethylene glycol, 1,2-propanediol, 1,3-propanediol, 1,4-butylene glycol, 1,3-butylene glycol, 2,3-butylene glycol, neopentyl glycol, 2-butyl-2-ethyl-1,3-propanediol, dipropylene glycol, hexane triol, dimethylolpentane, dimethylolethane, trimethylolethane, trimethylolpropane, trimethylolbutane, di-trimethylolethane, di-trimethylolpropane, ditrimethylolbutane, or polymers or mixtures of two or more thereof. Non-limiting examples of sugars include glucose, sucrose, fructose, raffinose, maltodextrose, galactose, xylose, maltose, lactose, sorbitol, mannose, erythrose, pentaerythritol, dipentaerythritol, tripentaerythritol, or mixtures of two or more thereof. Non-limiting examples of sugar alcohols include erythritol, xylitol, malitol, mannitol, sorbitol, or mixtures of two or more thereof. Preferably, the component (B), as detailed above, is selected from glycerol, diglycerol, trimethylolpropane, pentaerythritol, or mixtures of two or more thereof.

As used herein, the component (D) for preparing the drying alkyd resin component of the compound (A), as detailed above, refers to a monocarboxylic acid, or the corresponding triglyceride thereof, such as linseed fatty acid or linseed oil, sunflower fatty acid or sunflower oil, tung oil, safflower fatty acid or safflower oil, soybean fatty acid or soybean oil, poppy seed oil, tall oil, peanut oil, (dehydrated) castor fatty acid or (dehydrated) castor oil, corn oil, rapeseed oil, sesame seed oil, rice germ oil, cottonseed fatty acid or cottonseed oil, fish oil, herring oil, grape seed oil, flaxseed oil, chia oil, oiticica oil, menhaden oil, walnut oil, camelina oil, hemp seed oil, perilla oil, linoleic acid, α-linolenic acid, oleic acid, α-eleostearic acid, myristoleic acid, lauroleic acid, palmitoleic acid, or mixtures of two or more thereof. Preferably, the component (D), as detailed above, is selected from linseed oil, tung oil, perilla oil, poppy seed oil, tall oil, walnut oil, soybean oil, sunflower oil, safflower oil, flaxseed oil, grape seed oil, oiticica oil, cottonseed oil, fish oil, sesame seed oil, rice germ oil, camelina oil, rapeseed oil, corn oil, hemp seed oil, herring oil, chia oil, peanut oil, (dehydrated) castor oil, or mixtures of two or more thereof. The drying ability of the drying alkyd resin as used in the present invention is mainly derived from the presence of the component (D) in the alkyd resin composition.

According to the present invention, various proportions of the component (A), the component (B), and the component (D) may on the one hand be used to obtain the drying alkyd resin component of the compound (A) having the desired drying properties, and on the other hand to provide the necessary reactive functional groups, in particular reactive hydroxyl groups, for further enabling chemical modification yielding the compound (A) of the present invention, said compound (A) being selected from the group consisting of a polyurethane modified alkyd resin, an acrylic modified alkyd resin, and an acrylic modified polyurethane-alkyd resin.

According to a preferred embodiment of the composition (C) of the present invention, the compound (A), as detailed above, is selected from the group consisting of a polyurethane modified alkyd resin, an acrylic modified alkyd resin, and an acrylic modified polyurethane-alkyd resin.

According to one preferred embodiment of the composition (C) of the present invention, the compound (A) is a polyurethane modified alkyd resin.

Suitable preparation methods of polyurethane modified alkyd resins are generally known in the art. Reference can be made notably to US 4,116,902; US 2011/0236667 A1; and Ling et at. Industrial Crops and Products 2014, 52, 74 - 84.

In general, in order to prepare a polyurethane modified alkyd resin, a precursor alkyd resin component, as detailed above, may be first prepared, as detailed above, by subjecting a raw material composition comprising the component (A), as detailed above, the component (B), as detailed above, and the component (D), as detailed above, to one or more esterification and/or transesterification reactions until a certain acid number has been reached, such as for example an acid number from 6 to 1 mg KOH/g, or from 4 to 1.5 mg KOH/g, or from 3 to 2 mg KOH/g. Then, stepwise, the prepared precursor alkyd resin component, in particular the hydroxyl groups thereof, is further reacted after condensation with one or more at least difunctional polyisocyanates to form the polyurethane modified alkyd resin.

According to certain embodiments of the composition (C) of the present invention, the precursor alkyd resin component preferably has, prior to any further reaction of said component with one or more at least difunctional polyisocyanates to form the polyurethane modified alkyd resin, a hydroxyl functionality from 1.1 to 2.3, preferably equal to 2; a hydroxyl (OH) number from 40 to 130 mg KOH/g, or from 50 to 95 mg KOH/g; and an acid value from 6 to 1 mg KOH/g, or from 4 to 1.5 mg KOH/g, or from 3 to 2 mg KOH/g.

Within the context of the present invention, the hydroxyl (OH) number is preferably determined according to the standard DIN EN ISO 4629:2016 as the ratio of the mass of potassium hydroxide m_{KOH} having the same number of hydroxyl groups as the sample, and the mass m_{B} of that sample (or the mass of the solids in the sample for solutions, emulsions or dispersions). The customary unit of the hydroxyl (OH) number is mg KOH/g.

Within the context of the present invention, the acid number is preferably determined according to the standard DIN EN ISO 2114:2000 as the ratio of the mass of potassium hydroxide m_{KOH} which is needed to neutralise the sample under examination, and the mass m_{B} of this sample (or the mass of the solids in the sample for solutions, emulsions or dispersions). The customary unit of the acid number is mg KOH/g.

Non-limiting examples of at least difunctional polyisocyanates suitable for reaction with the precursor alkyd resin component, as detailed above, in order to form the polyurethane modified alkyd resin are 1,3-cyclohexane diisocyanate, 1-methyl-2,4-diisocyanatocyclohexane, 1-methyl-2,6-diisocyanatocyclohexane, tetramethylene diisocyanate, 4,4'-diisocyanatodiphenylmethane, 2,4'-diisocyanatodiphenylmethane, 2,4-disocyanatotoluene, 2,6-diisocyanatotoluene, α,α,α',α'-tetramethyl-m- or p-xylylene diisocyanate, 1,6-hexamethylene diisocyanate, 1-isocyanato-3,3,5-trimethyl-5-isocyanatomethylcyclohexane (isophorone diisocyanate), 4,4'-diisocyanatodicyclohexylmethane, and mixtures thereof, optionally also with other isocyanates and/or higher polyfunctional homologues and/or oligomers containing urethane, biuret, carbodiimide, isocyanurate, allophanate, iminooxadiazinedione and/or uretdione groups.

Suitable commercially available polyurethane modified alkyd resins for use in the composition (C) of the present invention notably include NeoPac^{™} PU485 available from DSM; Synthalat PWM 883 available from Synthopol; and WorléeSol E 150 W available from Worlée.

According to another preferred embodiment of the composition (C) of the present invention, the compound (A) is an acrylic modified alkyd resin.

Suitable preparation methods of acrylic modified alkyd resins are generally known in the art. Reference can be made notably to US 4,133,786; and US 6,627,700 B1.

In general, in order to prepare an acrylic modified alkyd resin, its precursor alkyd resin component, as detailed above, is first prepared, as detailed above, by subjecting a raw material composition comprising the component (A), as detailed above, the component (B), as detailed above, and the component (D), as detailed above, to one or more esterification and/or transesterification reactions until a certain acid number has been reached, such as for example an acid number from 15 to 40 mg KOH/g, or from 30 to 35 mg KOH/g. Then, stepwise, the prepared drying alkyd resin component, in particular the hydroxyl groups thereof, is further reacted after condensation with one or more aliphatic olefinic acids or esters to form the acrylic modified alkyd resin.

According to certain embodiments of the composition (C) of the present invention, the precursor alkyd resin component preferably has, prior to any further reaction of said component with one or more aliphatic olefinic acids or esters to form the acrylic modified alkyd resin, a hydroxyl (OH) number from 30 to 150 mg KOH/g, or from 40 to 60 mg KOH/g; and an acid value from 15 to 40 mg KOH/g, or from 30 to 35 mg KOH/g.

Non-limiting examples of aliphatic olefinic acids or esters suitable for reaction with the precursor alkyd resin component, as detailed above, in order to form the acrylic modified alkyd resin are (meth)acrylic acid; (meth)acrylic, crotonic, ethacrylic alkyl or cycloalkyl esters having up to 20 carbon atoms in the alkyl radical, such as methyl methacrylate, ethyl methacrylate, hydroxyethyl methacrylate, propyl methacrylate, hydroxypropyl methacrylate, methyl acrylate, ethyl acrylate, or n-butyl acrylate.

A suitable commercially available acrylic modified alkyd resin for use in the composition (C) of the present invention notably includes Resydrol^{®} AY 6705w/44WA available from Allnex.

According to another preferred embodiment of the composition (C) of the present invention, the compound (A) is an acrylic modified polyurethane-alkyd resin.

Suitable preparation methods of acrylic modified polyurethane-alkyd resins are generally known in the art. Reference can be made notably to US 6,166,150; and WO 2015101585 A1**.**

A suitable commercially available acrylic modified polyurethane-alkyd resin for use in the composition (C) of the present invention notably includes Resydrol^{®} AZ 6710w/41 WA available from Allnex.

As said above, the compound (A), as detailed above, relative to the total dry weight of the composition (C), is present in an amount from 40.00 to 80.00 wt. %.

Advantageously, the amount of the compound (A), as detailed above, relative to the total dry weight of the composition (C), is equal to or greater than 43.00 wt. %, preferably equal to or greater than 45.00 wt. %, more preferably equal to or greater than 47.00 wt. %.

It is further understood that the upper limit of the amount of the compound (A), as detailed above, relative to the total dry weight of the composition (C), is equal to or less than 70.00 wt. %, preferably equal to or less than 65.00 wt. %, more preferably equal to or less than 60.00 wt. %, even more preferably equal to or less than 55.00 wt. %.

In a preferred embodiment of the composition (C) of the present invention, the compound (A), as detailed above, relative to the total dry weight of the composition (C), is present in an amount from 43.00 to 70.00 wt. %, preferably in an amount from 45.00 to 65.00 wt. %, more preferably in an amount from 45.00 to 60.00 wt. %, even more preferably in an amount from 47.00 to 55.00 wt. %.

It is further understood that the compound (A), as detailed above, is provided as an emulsion in water, i.e. as an aqueous emulsion of the compound (A). The aqueous emulsion of the compound (A) may have a solids content from 25.0 to 65.0 wt. %, in particular from 40.0 to 55.0 wt. %, relative to the total weight of the aqueous emulsion of the compound (A).

Within the context of the present invention, the term "aqueous emulsion of the compound (A)" is intended to refer to an intimate mixture which contains incompletely miscible dispersed droplets, of microscopic or ultramicroscopic size, of the compound (A) homogeneously distributed throughout an aqueous medium.

When the compound (A), as detailed above, is provided as an emulsion in water, the total solids content thereof can be measured according to a variety of techniques which are generally well-known in the art. Preferably, when the compound (A) is provided as an emulsion in water, the total solids content thereof is measured according to the standard DIN EN ISO 3251:2019.

In particular, the compound (A) as comprised in the composition (C), as detailed above, functions as a binder, thereby especially assuring optimal drying properties upon application of said composition (C) to wood products in such a way that the resulting coated layers demonstrate good mechanical properties in terms of hardness and hydrophobicity.

It is further understood that all definitions and preferences, as described above, equally apply for all further embodiments, as described below.

As said above, the composition (C), as detailed above, comprises at least one modified vegetable oil [compound (V), herein after], in which the vegetable oil is selected from the group consisting of linseed oil, sunflower oil, tung oil, safflower oil, soybean oil, poppy seed oil, tall oil, corn oil, rice germ oil, cottonseed oil, fish oil, herring oil, grape seed oil, flaxseed oil, chia oil, oiticica oil, walnut oil, camelina oil, hemp seed oil, and perilla oil, and wherein the compound (V) is present in an amount as determined by a dry weight ratio of compound (V) to compound (A) ranging from 0.10 to 0.35.

In addition to the drying properties of the compound (A), as detailed above, the inventors have found that for all of these vegetable oils of the compound (V) good results can be obtained in terms of contributing to the optimal drying properties of the composition (C), i.e. optimal crosslinking propensities of the composition (C) thereby leading to excellent curing speeds, upon application of the composition (C) to wood products.

Preferably, the vegetable oil is selected from the group consisting of linseed oil, sunflower oil, tung oil, safflower oil, soybean oil, poppy seed oil, tall oil, fish oil, grapeseed oil, flaxseed oil, walnut oil, hemp seed oil, and perilla oil; more preferably, the vegetable oil is selected from the group consisting of linseed oil, sunflower oil, tung oil, soybean oil, poppy seed oil, tall oil, walnut oil, hemp seed oil, and perilla oil; even more preferably, the vegetable oil is selected from the group consisting of linseed oil, sunflower oil, tung oil, and soybean oil; and most preferably, the vegetable oil is linseed oil.

Within the context of the present invention, the term "modified vegetable oil" is intended to refer to a water reducible vegetable oil in which the vegetable oil, as detailed above, is chemically derivatized or chemically modified in order to provide the resulting modified vegetable oil with a high water solubility when being contacted with an aqueous medium. These modified vegetable oils are generally known to those persons of ordinary skill in the art and they can be produced in various ways for their high water solubility to be achieved. The modified vegetable oil can for instance be obtained via the reaction of the vegetable oil, as detailed above, and at least one reactant selected from alcohols; methoxyalcohols; glycols; or polyglycols such as polyethylene glycol having an average molecular weight from 200 to 600; optionally further including lithium ricinoleate, phthalic anhydride and triphenyl phosphate. Alternatively, the modified vegetable oil can for instance be obtained via the reaction of the vegetable oil and at least one cyclic olefinically unsaturated anhydride. Non-limiting examples of suitable cyclic olefinically unsaturated anhydrides notably include maleic anhydride, citraconic anhydride, itaconic anhydride, dodecenylsuccinic anhydride, and tetrahydrophthalic anhydride. Maleic anhydride is particularly preferred in order to produce a maleinized or maleated modified vegetable oil.

In one embodiment of the composition (C) of the present invention, the compound (V), as detailed above, has an acid number from 10.0 to 100.0 mg KOH/g, or from 20.0 to 90.0 mg KOH/g, or from 30.0 to 80.0 mg KOH/g, or from 35.0 to 70.0 mg KOH/g.

In one embodiment of the composition (C) of the present invention, the compound (V), as detailed above, has a hydroxyl (OH) number from 35.0 to 200.0 mg KOH/g.

In one embodiment of the composition (C) of the present invention, the compound (V), as detailed above, has a weight-average molecular weight from 5000 to 40000 Da, preferably from 8000 to 35000 Da, and more preferably from 10000 to 35000 Da.

Suitable commercially available compounds (V) for use in the composition (C) of the present invention notably include Resydrol^{®} VAL 5547w, Resydrol^{®} VAL 7149w, Resydrol^{®} VAL 5227w, available from Allnex; Uradil AZ543 available from DSM; and WorléeSol 37 C available from Worlée.

As said above, the compound (V), as detailed above, is present in an amount as determined by a dry weight ratio of compound (V) to compound (A) ranging from 0.10 to 0.35.

Within the context of the present invention, the expression "the compound (V) is present in an amount as determined by a dry weight ratio of compound (V) to compound (A) ranging from 0.10 to 0.35" refers either to the amount of compound (V) when the composition (C) contains only one compound (V), or to the sum of the amounts of compound (V) when the composition (C) contains more than one compound (V). This being said, it means that it is necessary that, when more than one compound (V) is present, then it is the sum of the amounts of each of said compound (V) that is determined by a dry weight ratio of compound (V) to compound (A) ranging from 0.10 to 0.35.

Advantageously, the dry weight ratio of compound (V) to compound (A) is equal to or greater than 0.15, preferably equal to or greater than 0.20, more preferably equal to or greater than 0.22.

It is further understood that the upper limit of the dry weight ratio of compound (V) to compound (A) is equal to or less than 0.30 preferably equal to or less than 0.28 more preferably equal to or less than 0.25.

In a preferred embodiment of the composition (C) of the present invention, the dry weight ratio of compound (V) to compound (A) ranges from 0.15 to 0.30, preferably from 0.20 to 0.28, more preferably from 0.22 to 0.25.

According to certain embodiments of the composition (C) of the present invention, the compound (V), as detailed above, is provided as an aqueous solution containing the compound (V). When the compound (V) is provided as an aqueous solution, said aqueous solution may have a solids content from 20.0 to 98.0 wt. %, in particular from 90.0 to 98.0 wt. %, relative to the total weight of said aqueous solution containing the compound (V).

When the compound (V), as detailed above, is provided as an aqueous solution, the total solids content thereof can be measured according to a variety of techniques which are generally well-known in the art. Preferably, when the compound (V) is provided as an aqueous solution, the total solids content thereof is measured according to the standard DIN EN ISO 3251:2019.

It is further understood that all definitions and preferences, as described above, equally apply for all further embodiments, as described below.

As said above, the composition (C), as detailed above, comprises, relative to the total dry weight of the composition (C), from 1.00 to 10.00 wt. % of at least one cellulose compound chosen among microfibrillated cellulose (MFC) or cellulose nanocrystal (CNC).

Within the context of the present invention, the expression "from 1.00 to 10.00 wt. % of at least one cellulose compound" refers either to the amount of cellulose compound when the composition (C) contains only one cellulose compound, or to the sum of the amounts of cellulose compound when the composition (C) contains more than one cellulose compound. This being said, it means that it is necessary that, when more than one cellulose compound is present, then it is the sum of the amounts of each of said cellulose compound that ranges from 1.00 to 10.00 wt. %, relative to the total dry weight of the composition (C).

The inventors have surprisingly found that the cellulose compound, which is comprised in the composition (C), as detailed above, synergistically interacts with the amount of the compound (V) present in the composition (C), as detailed above, said amount of the compound (V) fulfilling the above-defined dry weight ratio of the compound (V) to the compound (A), as detailed above, thereby allowing the composition (C) to successfully incorporate high amounts of at least one liquid non-polar organic UV absorber resulting in the composition (C) now having an increased stability against UV radiation, while maintaining good mechanical properties in terms of hardness, and good workability in terms of wet edge time, as demonstrated in the experimental section.

According to one embodiment of the composition (C) of the present invention, the cellulose compound is microfibrillated cellulose (MFC), also known in the art, see for instance paragraphs [0035] and [0036] as described in US 2020/0086604 A1 and Table 1 in Zambrano, F. et al. BioResources 2020, 15, 4553 - 4590, via the synonymous designations nanofibrillated cellulose (NFC), or cellulose nanofibril (CNF). The terms "microfibrillated cellulose (MFC)", "nanofibrillated cellulose (NFC)", and "cellulose nanofibril (CNF)" are therefore used interchangeably herein.

In general, microfibrillated cellulose (MFC) is a type of cellulose known to a person skilled in the art. Microfibrillated cellulose (MFC) can be produced via a multiplicity of methodologies including mechanical treatment of cellulose fibers, such as for instance mechanical fibrillation, optionally combined with one or more enzymatic and/or chemical pre- or post-treatment steps, for example to hydrolyze or swell the fibers or reduce the quantity of hemicellulose or lignin therein. The cellulose fibers may be chemically modified before fibrillation, wherein the cellulose molecules contain functional groups other (or more) than found in the original cellulose. Such groups include, among others, carboxymethyl (CMC), aldehyde and/or carboxyl groups. Suitable preparation methods of microfibrillated cellulose (MFC) are generally known in the art. Reference can be made notably to Siró, I. et al. Cellulose 2010, 17, 459 - 494; WO 2010131016 A2; US 2020/0086604 A1; WO 2007091942 A1; WO 2015180844 A1; and WO 2011004301 A1**.**

Within the context of the present invention, the term "microfibrillated cellulose (MFC)" is intended to refer to a nano scale cellulose compound in which the constituting cellulose fibers have been opened up and have been partly or totally unraveled to form microfibrils so as to achieve an increased specific surface area of the microfibrillated cellulose (MFC), such as from 1 to 300 m²/g, or from 50 to 300 m²/g, when determined for a freeze-dried material with the BET method. Microfibrillated cellulose (MFC) is characterized by high water retention values (i.e. a high water holding capacity) and the ability to form stable gels at low solids in water or other polar solvents. These microfibrils are generally characterized by a particle diameter less than 300 nm, such as from 5 to 250 nm, or such as from 100 to 200 nm, and a particle length equal to or greater than 1 µm, such as greater than 10 µm.

Suitable commercially available microfibrillated cellulose (MFC) for use in the composition (C) of the present invention notably includes Curran^{®} available from CelluComp; Exilva^{®} f 01-v available from Borregaard; Valida^{®} S231C available from Sappi; and Celova^{®} M250R-P available from Weidmann.

According to another embodiment of the composition (C) of the present invention, the cellulose compound is cellulose nanocrystal (CNC), also known in the art, see for instance paragraph [0040] as described in EP 2639351 A1, via the synonymous designations cellulose (nano)whiskers, or nanocrystalline cellulose (NCC). The terms "cellulose nanocrystal (CNC)", "cellulose (nano)whiskers", and "nanocrystalline cellulose (NCC)" are therefore used interchangeably herein.

In general, cellulose nanocrystal (CNC) is a type of cellulose known to a person skilled in the art. Cellulose nanocrystal (CNC) can be produced via a multiplicity of methodologies including a controlled acid hydrolysis treatment of (native) cellulose fibers, such as acid hydrolysis with sulphuric acid (H₂SO₄), phosphoric acid (H₃PO₄), hydrobromic acid (HBr), or hydrochloric acid (HCl), optionally combined with one or more delignification steps since the presence of lignin in higher amounts may prohibit the formation of the nanocrystals. Suitable preparation methods of cellulose nanocrystal (CNC) are generally known in the art. Reference can be made notably to EP 2639351 A1; WO 2016055632 A1; and WO 2011/075837 A1.

Within the context of the present invention, the term "cellulose nanocrystal (CNC)" is intended to refer to stiff rod-like particles having structural dimensions in nanoscale width and length, and is features with high crystallinity. Preferably, the cellulose nanocrystals show a crystallinity of substantially 100 %. C The crystallinity may be measured with known methods in the art like X-ray measurements. Examples are wide angle X-ray scattering (WAXS), and small angle X-ray scattering (SAXS). The crystalline structure parts of the cellulose nanocrystals may be mixed with parts of amorphous, or partly amorphous structure. The geometric dimensions of CNCs, such as length and width, may vary depending on the origin of cellulose and the conditions for producing cellulose nanocrystal (CNC), thereby including the process conditions during acid hydrolysis in terms of duration, temperature, purity of the starting material, etc. Cellulose nanocrystal (CNC) is generally characterized by a particle diameter from 1 to 70 nm, such as from 1 to 15 nm, or from 1 to 5 nm; and a particle length from 50 to 5000 nm, such as from 50 to 1000 nm, or from 50 to 500 nm, or from 100 to 200 nm.

Suitable commercially available cellulose nanocrystal (CNC) for use in the composition (C) of the present invention notably includes CNC available from Nanografi; and CNC available from PowderNano.

According to a preferred embodiment of the composition (C) of the present invention, the cellulose compound is microfibrillated cellulose (MFC), as detailed above.

As said above, the cellulose compound, as detailed above, relative to the total dry weight of the composition (C), is present in an amount from 1.00 to 10.00 wt. %.

Advantageously, the amount of the cellulose compound, as detailed above, relative to the total dry weight of the composition (C), is equal to or greater than 1.50, preferably equal to or greater than 2.00, more preferably equal to or greater than 2.50, more preferably equal to or greater than 3.00, more preferably equal to or greater than 3.50, more preferably equal to or greater than 4.00, more preferably equal to or greater than 4.30 wt. %, more preferably equal to or greater than 4.50 wt. %, even more preferably equal to or greater than 4.70 wt. %.

It is further understood that the upper limit of the amount of the cellulose compound, as detailed above, relative to the total dry weight of the composition (C), is equal to or less than 8.00 wt. %, preferably equal to or less than 7.00 wt. %, more preferably equal to or less than 6.50 wt. %, more preferably equal to or less than 6.00 wt. %, even more preferably equal to or less than 5.50 wt. %.

In a preferred embodiment of the composition (C) of the present invention, the cellulose compound, as detailed above, relative to the total dry weight of the composition (C), is present in an amount from 1.50 to 8.00 wt. %, preferably in an amount from 2.00 to 7.00 wt. %, more preferably in an amount from 2.50 to 7.00 wt. %, more preferably in an amount from 2.50 to 6.50 wt. %, more preferably in an amount from 3.00 to 6.50 wt. %, more preferably in an amount from 3.50 to 6.50 wt. %, more preferably in an amount from 3.50 to 6.00 wt. %, more preferably in an amount from 4.00 to 6.00 wt. %, more preferably in an amount from 4.30 to 6.00 wt. %, more preferably in an amount from 4.50 to 6.00 wt. %, more preferably in an amount from 4.50 to 5.50 wt. %, even more preferably in an amount from 4.70 to 5.50 wt. %.

According to certain embodiments of the composition (C) of the present invention, the cellulose compound, as detailed above, is provided as a mixture in water, i.e. as an aqueous mixture of the cellulose compound. The cellulose compound can for instance be in the form of an aqueous paste. When the cellulose compound is provided as an aqueous mixture, said aqueous mixture may have a solids content from 5.00 to 30.00 wt. %, in particular from 8.00 to 25.00 wt. %, relative to the total weight of the aqueous mixture of the cellulose compound. Preferably, when the cellulose compound is provided as a mixture in water, the total solids content thereof is measured according to the standard DIN EN ISO 3251:2019.

It is further understood that all definitions and preferences, as described above, equally apply for all further embodiments, as described below.

As said above, the composition (C), as detailed above, comprises, relative to the total dry weight of the composition (C), from 3.00 to 25.00 wt. % of at least one liquid non-polar organic UV absorber.

Within the context of the present invention, the expression "from 3.00 to 25.00 wt. % of at least one liquid non-polar organic UV absorber" refers either to the amount of liquid non-polar organic UV absorber when the composition (C) contains only one liquid non-polar organic UV absorber, or to the sum of the amounts of liquid non-polar organic UV absorber when the composition (C) contains more than one liquid non-polar organic UV absorber. This being said, it means that it is necessary that, when more than one liquid non-polar organic UV absorber is present, then it is the sum of the amounts of each of said liquid non-polar organic UV absorber that ranges from 3.00 to 25.00 wt. %, relative to the total dry weight of the composition (C).

In general, liquid non-polar organic UV absorbers are well known additives known to a person skilled in the art of wood coating compositions for the preservation and the protection of wood products since these additives are frequently used to protected (wood) coatings from degradation, in particular photodegradation, especially with respect to outdoor weathering of wood products. These liquid non-polar organic UV absorbers filter out the harmful UV radiation, i.e. the harmful wavelengths of the light spectrum, thereby preventing subsequent photochemical reactions to occur within the wood coatings (i.e. coated layers) and therefore reducing the radical generation rate in order to prevent the degradation of both wood coatings and wood substrates or products.

Within the context of the present invention, the term "a liquid non-polar organic UV absorber" is intended to refer to a non-polar organic UV absorber which is liquid at a temperature equal to 20 °C, in particular said liquid non-polar organic UV absorber thereby being characterized by a melting point equal to 20 °C or less.

It is further understood that within the context of the present invention the melting point of the at least one liquid non-polar organic UV absorber, as detailed above, is a property that can be measured according to standard methods in the art. Known methods for measuring the melting point of compounds are notably the use of a capillary tube in a liquid bath, a capillary tube in a metal block, a Kofler hot bar, a melt microscope, differential thermal analysis (DTA), differential scanning calorimetry (DSC), freezing temperature, pour point etc.

Preferably, the melting point of the at least one liquid non-polar organic UV absorber is measured according to the OECD 102 guidelines for the testing of chemicals by differential scanning calorimetry (DSC) and more specifically according to the ASTM E472-86, ASTM E473-85, ASTM E537-76 and DIN 51005 standard methods.

Within the context of the present invention, the term "liquid non-polar organic UV absorber" is intended to refer to liquid organic UV absorbers having a water solubility of less than 1.00 wt. %, preferably less than 0.10 wt. %, more preferably less than 0.01 wt. % at 20 °C and at atmospheric pressure. Alternatively, the polarity of the liquid non-polar organic UV absorber may also be expressed in terms of log p. The partition coefficient log p of the liquid non-polar organic UV absorber is generally known in the art and constitutes a widely used and applied parameter. The partition coefficient log p of the liquid non-polar organic UV absorber designates the calculated logarithm of the partition coefficient of said liquid non-polar organic UV absorber between 1-octanol and water. The log p value of the liquid non-polar organic UV absorber can be calculated according to Meylan, W. M. et al. Journal of Pharmaceutical Sciences 1995, 84, 83 - 92, or alternatively the log p value of the liquid non-polar organic UV absorber can be determined via the molecular structure of the liquid non-polar organic UV absorber by using commercially available software such as ChemDraw Professional 17 Suite available from PerkinElmer Informatics. The higher the log p value of the liquid non-polar organic UV absorber, the greater its hydrophobicity or non-polarity. Preferably, the liquid non-polar organic UV absorber has a log p value greater than 2.

The inventors have surprisingly found that high amounts of at least one liquid non-polar organic UV absorber can now be successfully incorporated in the composition (C), as detailed above, thereby resulting in the composition (C) now having an increased stability against UV radiation, while maintaining good mechanical properties of said composition (C) in terms of hardness, and good workability in terms of wet edge time, and without detracting or adversely affecting the transparency of a coated layer comprising the composition (C) in case said composition (C) is a transparent composition (C), when said composition (C) comprises at least one modified alkyd resin, as detailed above, in combination with at least one cellulose compound, as detailed above, whereby the amount of the at least one modified vegetable oil fulfills a defined dry weight ratio of the at least one modified vegetable oil to the at least one modified alkyd resin, as detailed above, and whereby said amount of the at least one modified vegetable oil in addition synergistically interacts with the at least one cellulose compound which is comprised in the composition (C).

Furthermore, the inventors have surprisingly found that high amounts of at least one liquid non-polar organic UV absorber can now be successfully incorporated in the composition (C), as detailed above, without any need for using relatively high amounts of externally added emulsifiers or surfactants which may increase the water sensitivity of the resulting composition(C) upon application to wood products, and which may in addition negatively affect other mechanical properties of the resulting composition (C) such as for example its adhesion to the wood product, or the hardness of the coated layer upon applying the composition (C) to the wood product, since these externally added emulsifiers or surfactants do not crosslink during curing (in contrast to the compound (V), as detailed above). Furthermore in addition, advantageously, any need for using significantly more expensive non-polar organic UV absorbers which are encapsulated in advance in a certain polymer matrix, and which may impair one or more mechanical properties of the resulted coated layer to the wood product, is now redundant in view of the composition (C) of the present invention.

In general, the at least one liquid non-polar organic UV absorber as comprised in the composition (C), as detailed above, is not limited to a particular type of liquid non-polar organic UV absorbers.

According to a preferred embodiment of the composition (C) of the present invention, the at least one liquid non-polar organic UV absorber is selected from 2-hydroxyphenyl-1,3,5-triazines, or 2-(2'-hydroxyphenyl)-benzotriazoles.

According to one preferred embodiment of the composition (C) of the present invention, the at least one liquid non-polar organic UV absorber is a 2-hydroxyphenyl-1,3,5-triazines, also known in the art via the synonymous designation 2-hydroxyphenyl-s-triazines. The terms "2-hydroxyphenyl-1,3,5-triazine", and "2-hydroxyphenyl-s-triazine" are therefore used interchangeably herein.

2-hydroxyphenyl-1,3,5-triazines and their use as liquid non-polar organic UV absorbers are generally known to those persons of ordinary skill in the art. As non-limiting examples of suitable 2-hydroxyphenyl-1,3,5-triazines, mention may be made of 2-[4-[(2-hydroxy-3-dodecyloxypropyl)oxy]-2-hydroxyphenyl]-4,6-bis(2,4-dimethylphenyl)-1,3,5-triazine; 2-[4-[(2-hydroxy-3-tridecyloxypropyl)oxy]-2-hydroxyphenyl]-4,6-bis(2,4-dimethylphenyl)-1,3,5-triazine; 2-(2-hydroxy-4-(mixed iso-octyloxyphenyl)-4,6-bis(2,4-dimethylphenyl)-1,3,5-triazine; 2-(2-hydroxy-4-tridecyloxyphenyl)-4,6-bis(2,4-dimethylphenyl)-1,3,5-triazine; 2-[2-hydroxy-4-(2-hydroxy-3-butyloxypropyloxy)phenyl]-4,6-bis(2,4-dimethylphenyl)-1,3,5-triazine; 2-[2-hydroxy-4-(2-hydroxy-3-octyloxypropyloxy)-phenyl]-4,6-bis-(2,4-dimethylphenyl)-1,3,5-triazine; 2-[4-dodecyloxy/tridecyloxy-2-hydroxypropoxy)-2-hydroxyphenyl]-4,6-bis(2,4-dimethylphenyl)-1,3,5-triazine; and 2-[2-hydroxy-4-(2-hydroxy-3-dodecyloxypropoxy)phenyl]-4,6-bis(2,4-dimethylphenyl)-1,3,5-triazine.

Suitable commercially available 2-hydroxyphenyl-1,3,5-triazines for use as the at least one liquid non-polar organic UV absorber, as detailed above, in the composition (C) of the present invention notable include Tinuvin^{®} 400, Tinuvin^{®} 477, available from BASF.

According to another preferred embodiment of the composition (C) of the present invention, the at least one liquid non-polar organic UV absorber is a 2-(2'-hydroxyphenyl)-benzotriazole.

2-(2'-hydroxyphenyl)-benzotriazoles and their use as liquid non-polar organic UV absorbers are generally known to those persons of ordinary skill in the art. As non-limiting examples of suitable 2-(2'-hydroxyphenyl)-benzotriazoles, mention may be made of 2-(2'-hydroxy-3'-tert-butyl-5'-[2-(octyloxy)carbonyl)ethyl]phenyl)-benzotriazole; 2-(3'-dodecyl-5'-methyl-2'-hydroxyphenyl)-benzotriazole; 2-(3'-tert-butyl-5'-(2-octyloxycarbonyl)ethyl-2'-hydroxyphenyl)-benzotriazole; 2-(3'-tert-butyl-5'-(2-octyloxycarbonyl)ethyl-2'-hydroxyphenyl)-5-chlorobenzotriazole; 2-(3'-tert-butyl-5'-[2-(2-ethylhexyloxy)-carbonylethyl]-2'-hydroxyphenyl)-5-chlorobenzotriazole; 2-(3'-tert-butyl-5'-[2-(2-ethylhexyloxy)-carbonylethyl]-2'-hydroxyphenyl)-benzotriazole; 2-(3'-tert-butyl-5'-(2-methoxycarbonylethyl)-2'-hydroxyphenyl)-5-chlorobenzotriazole; 2-(3'-tert-butyl-5'-(2-methoxycarbonylethyl)-2'-hydroxyphenyl)-benzotriazole; 2-(3'-tert-butyl-5'-(2-iso-octyloxycarbonylethyl)-2'-hydroxyphenyl)-benzotriazole; 2-(3'-dodecyl-5'-methyl-2'-hydroxyphenyl)-benzotriazole; and the transesterification product of 2-[3'-tert-butyl-5'-(2-methoxycarbonylethyl)-2'-hydroxyphenyl]-benzotriazole with at least one reactant selected from aliphatic alcohols such as C₇₋₉ aliphatic alcohols, or polyethylene glycol such as polyethylene glycol 300.

Suitable commercially available 2-(2-hydroxyphenyl)-benzotriazoles for use as the at least one liquid non-polar organic UV absorber, as detailed above, in the composition (C) of the present invention notable include Tinuvin^{®} 384-2, Tinuvin^{®} 99-2, Tinuvin^{®} 571, Tinuvin^{®} 1130, available from BASF.

As said above, the liquid non-polar organic UV absorber, as detailed above, relative to the total dry weight of the composition (C), is present in an amount from 3.00 to 25.00 wt. %.

Advantageously, the amount of the liquid non-polar organic UV absorber, as detailed above, relative to the total dry weight of the composition (C), is equal to or greater than 5.00 wt. %, preferably equal to or greater than 7.00 wt. %, preferably equal to or greater than 9.00 wt. %, more preferably equal to or greater than 10.00 wt. %.

It is further understood that the upper limit of the amount of the liquid non-polar organic UV absorber, as detailed above, relative to the total dry weight of the composition (C), is equal to or less than 20.00 wt. %, preferably equal to or less than 18.00 wt. %, more preferably equal to or less than 16.00 wt. %, more preferably equal to or less than 15.50 wt. %, even more preferably equal to or less than 14.00 wt. %.

In a preferred embodiment of the composition (C) of the present invention, the liquid non-polar organic UV absorber, as detailed above, relative to the total dry weight of the composition (C), is present in an amount from 5.00 to 20.00 wt. %, preferably in an amount from 5.00 to 18.00 wt. %, more preferably in an amount from 7.00 to 16.00 wt. %, more preferably in an amount from 9.00 to 15.00 wt. %, even more preferably in an amount from 10.00 to 14.00 wt. %.

According to another embodiment of the composition (C) of the present invention, the at least one liquid non-polar organic UV absorber, as detailed above, is provided as a solution in one or more organic solvents, such as 1-methoxy-2-propyl-acetate or 1-methoxypropan-2-ol. When the at least one liquid non-polar organic UV absorber is provided as a solution in one or more organic solvents, said solution may have a solids content from 70.00 to 98.00 wt. %, in particular from 80.00 to 95.00 wt. %, relative to the total weight of the solution.

According to another embodiment of the present invention, the composition (C), as detailed above, may further comprise at least one solid non-polar organic UV absorber.

Within the context of the present invention, the expression "at least one solid non-polar organic UV absorber" is intended to denote one or more than one solid non-polar organic UV absorber. Mixtures of solid non-polar organic UV absorbers can also be used for the purpose of the invention. In the remainder of the text, the expression "solid non-polar organic UV absorber" is understood, for the purposes of the present invention, both in the plural and the singular form.

Within the context of the present invention, the term "a solid non-polar organic UV absorber" is intended to refer to a non-polar organic UV absorber which is solid at a temperature equal to 20 °C, in particular said solid non-polar organic UV absorber thereby being characterized by a melting point higher than 20 °C.

It is further understood that within the context of the present invention the melting point of the at least one solid non-polar organic UV absorber, as detailed above, is a property that can be measured according to standard methods in the art. Known methods for measuring the melting point of compounds are notably the use of a capillary tube in a liquid bath, a capillary tube in a metal block, a Kofler hot bar, a melt microscope, differential thermal analysis (DTA), differential scanning calorimetry (DSC), freezing temperature, pour point etc.

Preferably, the melting point of the at least one solid non-polar organic UV absorber is measured according to the OECD 102 guidelines for the testing of chemicals by differential scanning calorimetry (DSC) and more specifically according to the ASTM E472-86, ASTM E473-85, ASTM E537-76 and DIN 51005 standard methods.

Within the context of the present invention, the term "solid non-polar organic UV absorber" is intended to refer to solid organic UV absorbers having a water solubility of less than 1.00 wt. %, preferably less than 0.10 wt. %, more preferably less than 0.01 wt. % at 20 °C and at atmospheric pressure. Alternatively, the polarity of the solid non-polar organic UV absorber may also be expressed in terms of log p. The partition coefficient log p of the solid non-polar organic UV absorber is generally known in the art and constitutes a widely used and applied parameter. The partition coefficient log p of the solid non-polar organic UV absorber designates the calculated logarithm of the partition coefficient of said solid non-polar organic UV absorber between 1-octanol and water. The log p value of the solid non-polar organic UV absorber can be calculated according to Meylan, W. M. et al. Journal of Pharmaceutical Sciences 1995, 84, 83 - 92, or alternatively the log p value of the solid non-polar organic UV absorber can be determined via the molecular structure of the solid non-polar organic UV absorber by using commercially available software such as ChemDraw Professional 17 Suite available from PerkinElmer Informatics. The higher the log p value of the solid non-polar organic UV absorber, the greater its hydrophobicity or non-polarity. Preferably, the solid non-polar organic UV absorber has a log p value greater than 2.

When present, the at least one solid non-polar organic UV absorber as comprised in the composition (C), as detailed above, is not limited to a particular type of solid non-polar organic UV absorbers.

According to one embodiment of the composition (C) of the present invention, the at least one solid non-polar organic UV absorber is selected from the group consisting of oxalic anilides, 2-hydroxybenzophenones, 2-hydroxyphenyl-1,3,5-triazines, and 2-(2'-hydroxyphenyl)-benzotriazoles.

According to one embodiment of the composition (C) of the present invention, the at least one solid non-polar organic UV absorber is an oxalic anilide, also known in the art via the synonymous designations oxanilide, or diphenyl oxamide. The terms "oxalic anilide", "oxanilide", and "diphenyl oxamide" are therefore used interchangeably herein.

Oxalic anilides and their use as solid non-polar organic UV absorbers are generally known to those persons of ordinary skill in the art. As non-limiting examples of suitable oxalic anilides, mention may be made of 4,4'-dioctyloxyoxanilide; 2,2'-diethoxyoxanilide; 2,2'-dioctyloxy-5,5'-di-tert-butoxanilide; 2,2'-didodecyloxy-5,5'-di-tert-butyloxanilide; 2-ethoxy-2'-ethyloxanilide; 2-ethoxy-5-tert-butyl-2'-ethyloxanilide and its mixture with 2-ethoxy-2'-ethyl-5,4'-di-tert-butoxanilide; mixtures of o- and p-methoxy disubstituted oxanilides; and mixtures of o- and p-ethoxy disubstituted oxanilides.

Suitable commercially available oxalic anilides for use as the at least one solid non-polar organic UV absorber, as detailed above, in the composition (C) of the present invention notable include Tinuvin^{®} 312, available from BASF.

According to another embodiment of the composition (C) of the present invention, the at least one solid non-polar organic UV absorber is a 2-hydroxybenzophenone.

2-hydroxybenzophenones and their use as solid non-polar organic UV absorbers are generally known to those persons of ordinary skill in the art. As non-limiting examples of suitable 2-hydroxybenzophenones, mention may be made of 2,4-dihydroxybenzophenone; 4-methoxy-2-hydroxybenzophenone; 4-octoxy-2-hydroxybenzophenone; 4-decyloxy-2-hydroxybenzophenone; 4-dodecyloxy-2-hydroxybenzophenone; 4-benzyloxy-2-hydroxybenzophenone; 2,2',4,4'-tetrahydroxybenzophenone; 4-methoxy-2,2'-dihydroxybenzophenone; and 4,4'-dimethoxy-2,2'-dihydroxybenzophenone.

Suitable commercially available 2-hydroxybenzophenones for use as the at least one solid non-polar organic UV absorber, as detailed above, in the composition (C) of the present invention notable include Chimassorb^{®} 81, and Chimassorb^{®} 90, available from BASF.

According to another embodiment of the composition (C) of the present invention, the at least one solid non-polar organic UV absorber is a 2-hydroxyphenyl-1,3,5-triazines, also known in the art via the synonymous designation 2-hydroxyphenyl-s-triazines. The terms "2-hydroxyphenyl-1,3,5-triazine", and "2-hydroxyphenyl-s-triazine" are therefore used interchangeably herein.

2-hydroxyphenyl-1,3,5-triazines and their use as solid non-polar organic UV absorbers are generally known to those persons of ordinary skill in the art. As non-limiting examples of suitable 2-hydroxyphenyl-1,3,5-triazines, mention may be made of 2,6-bis-(2,4-dimethylphenyl)-4-(2-hydroxy-4-octyloxyphenyl)-s-triazine; 2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2 hydroxy-4-(2-hydroxyethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine; 2,4-bis(2,4-dihydroxyphenyl)-6-(2,4-dimethylphenyl)-s-triazine; 2,4,6-tris(2-hydroxy-4-octyloxyphenyl)-1,3,5-triazine; 2,4,6-tris(2-hydroxy-4-butoxyphenyl)-1,3,5-triazine; 2,4-bis(2-hydroxy-4-propyloxyphenyl)-6-(2,4-dimethylphenyl)-1,3,5-triazine; 2-(2-hydroxy-4-octyloxyphenyl)-4,6-bis(4-methylphenyl)-1,3,5-triazine; 2-(2-hydroxy-4-dodecyloxyphenyl)-4,6-bis(2,4-dimethylphenyl)-1,3,5-triazine; 2-(2-hydroxy-4-hexyloxy)phenyl-4,6-diphenyl-1,3,5-triazine; 2-(2-hydroxy-4-methoxyphenyl)-4,6-diphenyl-1,3,5-triazine; 2,4,6-tris[2-hydroxy-4-(3-butoxy-2-hydroxypropoxy)phenyl]-1,3,5-triazine; 2-(2-hydroxyphenyl)-4-(4-methoxyphenyl)-6-phenyl-1,3,5-triazine; 4,4'-[6-(4-methoxyphenyl)-1,3,5-triazine-2,4-diyl]dibenzene-1,3-diol; 2,4-bis(2-hydroxy-4-butoxyphenyl)-6-(2,4-dibutoxyphenyl)-1,3,5-triazine; bis-iso-octyl-substituted tris-resorcinol-1,3,5-triazine; tris-iso-octyl-substituted tris-resorcinol-1,3,5-triazine; tetra-iso-octyl-substituted tris-resorcinol-1,3,5-triazine; 2-(2-hydroxyphenyl)-4-(4-methoxyphenyl)-6-phenyl-1,3,5-triazine; 2-(2-hydroxy-4-[3-(2-ethylhexy)-1-oxy)-2-hydroxypropyloxy]phenyl)-4,6-bis(2,4-dimethylphenyl)-1,3,5-triazine; 2-(2-hydroxy-4-(2-ethylhexyl)oxy)phenyl-4,6-di(4-phenyl)phenyl-1,3,5-triazine; and 2,4,6-tri(2,4-dihydroxyphenyl)-1,3,5 triazine.

Suitable commercially available 2-hydroxyphenyl-1,3,5-triazines for use as the at least one solid non-polar organic UV absorber, as detailed above, in the composition (C) of the present invention notable include Tinuvin^{®} 460, Tinuvin^{®} 405, Tinuvin^{®} 479, and Tinuvin^{®} 1577, available from BASF.

According to another embodiment of the composition (C) of the present invention, the at least one solid non-polar organic UV absorber is a 2-(2'-hydroxyphenyl)-benzotriazole.

2-(2'-hydroxyphenyl)-benzotriazoles and their use as solid non-polar organic UV absorbers are generally known to those persons of ordinary skill in the art. As non-limiting examples of suitable 2-(2'-hydroxyphenyl)-benzotriazoles, mention may be made of 2-(3',5'-di-tert-amyl-2'-hydroxyphenyl)-benzotriazole; 2-[3',5'-di(α,α-dimethylbenzyl)-2'-hydroxyphenyl]-benzotriazole; 2-(5'-methyl-2'-hydroxyphenyl)-benzotriazole; 2-(3',5'-di-tert-butyl-2'-hydroxyphenyl)-benzotriazole; 2-(5'-tert-butyl-2'-hydroxyphenyl)-benzotriazole; 2-(5'-(1,1,3,3-tetramethylbutyl)-2'-hydroxyphenyl)-benzotriazole; 2-(3'-tert-butyl-5'-methyl-2'-hydroxyphenyl)-5-chlorobenzotriazole; 2-(3'-sec-butyl-5'-tert-butyl-2'-hydroxyphenyl)-benzotriazole; 2-(4'-octoxy-2'-hydroxyphenyl)-benzotriazole; 2,2-methylenebis[4-(1,1,3,3-tetramethylbutyl)-6-benzotriazol-2-ylphenol]; 2-(2H-benzotriazol-2-yl)-4,6-bis(1-methyl-1-phenylethyl)phenol; 2-(2H-Benzotriazol-2-yl)-6-(1-methyl-1-phenylethyl)-4-(1,1,3,3-tetramethylbutyl) phenol; 2-[3'-(α,α-dimethylbenzyl)-5'-(1,1,3,3-tetramethylbutyl)-2'-hydroxyphenyl]-benzotriazole; and 2-[3'-(1,1,3,3-tetramethylbutyl)-5'-(α,α-dimethylbenzyl)-2'-hydroxyphenyl]-benzotriazole.

Suitable commercially available 2-(2-hydroxyphenyl)-benzotriazoles for use as the at least one solid non-polar organic UV absorber, as detailed above, in the composition (C) of the present invention notable include Tinuvin^{®} 900, Tinuvin^{®} 928, Tinuvin^{®} 326, available from BASF; Cyasorb^{®} UV-5411, available from Solvay.

Generally, the amount of the solid non-polar organic UV absorber, as detailed above, when present, is from 0.10 to 20.00 wt. %, or from 0.10 to 15.00 wt. %, relative to the total dry weight of the composition (C).

It is further understood that all definitions and preferences, as described above, equally apply for all further embodiments, as described below.

According to certain embodiments of the composition (C) of the present invention, the composition (C), as detailed above, has a total solids content from 15.00 to 55.00 wt. %, relative to the total weight of the composition (C).

The total solids content of the composition (C) of the present invention can be measured according to a variety of techniques which are generally well-known in the art. Preferably, the total solids content of the composition (C) is measured according to the standard DIN EN ISO 3251:2019.

Advantageously, the total solids content of the composition (C), as detailed above, relative to the total weight of the composition (C), is equal to or greater than 20.00 wt. %, preferably equal to or greater than 24.00 wt. %, preferably equal to or greater than 26.00 wt. %.

It is further understood that the upper limit of the totals solids content of the composition (C), as detailed above, relative to the total weight of the composition (C), is equal to or less than 50.00 wt. %, preferably equal to or less than 45.00 wt. %, preferably equal to or less than 40.00 wt. %, preferably equal to or less than 38.00 wt. %, more preferably equal to or less than 36.00 wt. %.

In a preferred embodiment of the composition (C) of the present invention, the composition (C), as detailed above, has a total solids content from 20.00 to 50.00 wt. %, preferably from 20.00 to 45.00 wt. %, preferably from 24.00 to 40.00 wt. %, preferably from 24.00 to 38.00 wt. %, preferably from 26.00 to 36.00 wt. %.

Within the context of the present invention, it is further understood that in order to comply with the total solids content of the composition (C), as detailed above, relative to the total weight of the composition (C), the water as comprised in the composition (C) may originate from the water when one or more of the components of the composition (C) are provided as an aqueous solution, as an aqueous mixture, or as an aqueous emulsion during the method for the manufacturing of the composition (C), and/or the water as comprised in the composition (C) may also originate from the water that may be added externally during the manufacturing of the composition (C).

It is further understood that all definitions and preferences, as described above, equally apply for all further embodiments, as described below.

According to certain embodiments of the present invention, the composition (C), as detailed above, may further comprise at least one synthetic micronized wax [micronized wax (Mₚ), herein after] selected from the group consisting of micronized polytetrafluoroethylene wax, micronized hybrid wax of polyethylene-polytetrafluoroethylene wax, micronized Fischer-Tropsch wax, micronized polyethylene wax, micronized polypropylene wax, micronized polyamide wax, and micronized polymer hybrids thereof, said at least one synthetic micronized wax having a particle size D₉₀ equal to or less than 36 µm and a particle size D₅₀ equal to or less than 20 µm.

Within the context of the present invention, the expression "at least one synthetic micronized wax" is intended to denote one or more than one synthetic micronized wax. Mixtures of synthetic micronized waxes can also be used for the purpose of the invention. In the remainder of the text, the expression "synthetic micronized wax" is understood, for the purposes of the present invention, both in the plural and the singular form.

The micronized wax (Mₚ) may be commercially available or may be prepared. Said preparation of the micronized wax (Mₚ) may be carried out using conventional methods known to the skilled in the art such as melt dispersion techniques, spraying techniques such as spray chilling, milling techniques such as air jet milling, precipitation techniques, grinding techniques, or bead polymerization.

Within the context of the present invention, the term "micronized polyethylene wax" is also intended to refer to micronized non-polar polyethylene wax and micronized oxidized high-density polyethylene wax.

Within the context of the present invention, the term "micronized polypropylene wax" is also intended to refer to micronized non-polar polypropylene wax.

Within the context of the present invention, the term "polyamide wax" is also intended to refer to micronized ethylene-bis-stearamide wax, micronized erucamide wax, micronized stearamide wax, and micronized amide wax made of sugar cane.

As non-limiting examples of suitable micronized polymer hybrids, mention may be also made of micronized hybrid wax of Fischer-Tropsch wax polytetrafluoroethylene wax and silica, micronized hybrid wax of Fischer-Tropsch wax and polyethylene wax, micronized hybrid wax of polyethylene wax and amide wax, micronized hybrid wax of Fischer-Tropsch wax and amide wax, micronized hybrid wax of polyethylene wax polypropylene wax Fischer-Tropsch wax and amide wax.

The use and presence of micronized waxes (Mₚ) has a decisive influence with regards to the resulting composition (C) according to the present invention having good abrasion resistance, scratch resistance, antiblocking, water repellency, and slip resistance properties when being applied to wood products.

Advantageously, the micronized wax (Mₚ), as detailed above, has a particle size D₉₀ equal to or less than 32.0 µm and a particle size D₅₀ equal to or less than 18.0 µm, preferably a particle size D₉₀ equal to or less than 29.0 µm and a particle size D₅₀ equal to or less than 16.0 µm, more preferably a particle size D₉₀ equal to or less than 25.0 µm and a particle size D₅₀ equal to or less than 14.0 µm, more preferably a particle size D₉₀ equal to or less than 22.0 µm and a particle size D₅₀ equal to or less than 12.0 µm, more preferably a particle size D₉₀ equal to or less than 18.0 µm and a particle size D₅₀ equal to or less than 10.0 µm.

According to one embodiment of the composition (C) of the present invention, the particles of the micronized wax (Mₚ), as detailed above, have a particle size according to one of the following particle size distributions:
D₁₀ ≤ 3.0 µm and D₉₀ ≤ 36.0 µm and D₅₀ ≤ 20.0 µm;
preferably, D₁₀ ≤ 3.0 µm and D₉₀ ≤ 32.0 µm and D₅₀ ≤ 18.0 µm;
more preferably, D₁₀ ≤ 3.0 µm and D₉₀ ≤ 29.0 µm and D₅₀ ≤ 16.0 µm;
more preferably, D₁₀ ≤ 3.0 µm and D₉₀ ≤ 25.0 µm and D₅₀ ≤ 14.0 µm;
more preferably, D₁₀ ≤ 3.0 µm and D₉₀ ≤ 22.0 µm and D₅₀ ≤ 12.0 µm;
more preferably, D₁₀ ≤ 3.0 µm and D₉₀ ≤ 18.0 µm and D₅₀ ≤ 10.0 µm.

According to the present invention, a particle size of the micronized wax (Mₚ), as detailed above, expressed as Dₓₓ ≤ Y denotes a percentage (xx%) by weight of particles of the micronized wax (Mₚ) having a particle size equal to or less than Y.

For example, D₉₀ ≤ 32.0 µm denotes that 90 wt. % of the particles of the micronized wax (Mₚ), as detailed above, has a particle size equal to or less than 32.0 µm.

According to the present invention, the particle size of the particles of the micronized wax (Mₚ) is measured according to DIN ISO 13320.

Generally, the amount of the micronized wax (Mₚ), as detailed above, when present, is from 1.00 to 25.00 wt. %, or from 2.00 to 20.00 wt. %, or from 5.00 to 18.00 wt. %, or from 10.00 to 15.00 wt. %, relative to the total dry weight of the composition (C).

According to certain embodiments of the present invention, the composition (C), as detailed above, may further comprise at least one pigment to enhance the appearance of the composition (C).

Within the context of the present invention, the expression "at least one pigment" is intended to denote one or more than one pigment. Mixtures of pigments can also be used for the purpose of the invention. In the remainder of the text, the expression "pigment" is understood, for the purposes of the present invention, both in the plural and the singular form.

Said pigments are known to those skilled in the art of wood coating compositions. Non-limiting examples of suitable pigments notably include: inorganic and organic pigments. As non-limiting examples of suitable inorganic pigments mention may be made of compounds of metals such as iron, zinc, titanium, lead, chromium, copper, cadmium, calcium, zirconium, cobalt, magnesium, aluminum, nickel, and other transition metals. Generally, some non-limiting examples of suitable inorganic pigments include iron oxides, including red iron oxides, yellow iron oxides, black iron oxides and brown iron oxides; carbon black, iron hydroxide, graphite, black micaceous iron oxide, aluminum flake pigments, pearlescent pigments; calcium carbonate; calcium phosphate; calcium oxide; calcium hydroxide; bismuth oxide; bismuth hydroxide; bismuth carbonate; copper carbonate; copper hydroxide; basic copper carbonate; silicon oxide; zinc carbonate; barium carbonate; barium hydroxide; strontium carbonate; zinc oxide; zinc phosphate; zinc chromate; barium chromate; chrome oxide, titanium dioxide, zinc sulfide, antimony oxide, or mixtures of two or more thereof. As non-limiting examples of suitable organic pigments mention may be made of monoazo (arylide) pigments such as PY3, PY65, PY73, PY74, PY97 and PY98; disazo (diarylide); disazo condensation; benzimidazolone; beta naphthol; naphthol: metal-organic complexes; isoindoline and isoindolinone; quinacridone; perylene; perinone; anthraquinone; diketopyrrolopyrrole; dioxazine; triacrylcarbonium; the phthalocyanine pigments, such as cobalt phthalocyanine, copper phthalocyanine, copper semichloro- or monochlorophthalocyanine, copper phthalocyanine, metal-free phthalocyanine, copper polychlorophthalocyanine, etc.; organic azo-compounds; organic nitro-compounds; polycyclic compounds such as phthalocyanine pigments, quinacridone pigments, perylene and perinone pigments; diketopyrrolopyrrole (DPP) pigments; thioindigo pigments; dioxazine pigments; quinophthalone pigments; triacrylcarbonium pigments, diaryl pyrrolopyroles, or mixtures of two or more thereof.

The at least one pigment is typically provided as an aqueous paste as a result of said at least one pigment being dispersed in water in the presence of suitable wetting and/or dispersing agents. Such aqueous pastes containing the at least one pigment are commercially available and known to the person skilled in the art.

As to the amount of the pigments, it is understood that the skilled person in the art will practise said pigments in a suitable amount according to standard and general practice known by said skilled person in the art.

Generally, the amount of the pigments, as detailed above, when present, is from 0.10 to 25.00 wt. %, or from 1.00 to 18.00 wt. %, or from 2.00 to 15.00 wt. %, or from 3.00 to 15.00 wt. %, or from 5.00 to 10.00 wt. %, relative to the total dry weight of the composition (C).

According to certain embodiments of the present invention, the composition (C), as detailed above, is substantially free of pigments thereby forming a transparent composition (C).

Within the context of the present invention, the term "a transparent composition (C)" is intended to denote the application of the composition (C) to wood products, thereby resulting in a coated layer containing the composition (C), said coated layer further having the property of transmitting rays of light through its substance, without appreciable scattering, so that bodies situated beyond or behind can be distinctly seen.

Within the context of the present invention, the term "the composition (C) is substantially free of pigments" is intended to denote that no pigments are present in the composition (C), as detailed above, or only a low amount of pigments which does not adversely affect the transparency of the composition (C), in particular pigments in an amount less than 10.00 wt. %, more particularly pigments in an amount less than 8.00 wt. %, relative to the total dry weight of the composition (C).

Alternatively, a transparent composition (C), as detailed above, may also be obtained via the use of one or more transparent iron oxide pigments. These transparent iron oxide pigments are known to a person skilled in the art of wood coating compositions.

According to certain embodiments of the present invention, the composition (C), as detailed above, may further comprise at least one other additional ingredient [ingredient (Ic), herein after] to enhance the appearance, storage, transport, handling and/or performance of the composition (C).

Within the context of the present invention, the expression "at least one other additional ingredients [ingredient (Ic), herein after]" is intended to denote one or more than one ingredient (Ic). Mixtures of ingredients (Ic) can also be used for the purpose of the invention. In the remainder of the text, the expression "ingredient (Ic)" is understood, for the purposes of the present invention, both in the plural and the singular form.

Said ingredients (Ic) are known to those skilled in the art of wood coating compositions. Non-limiting examples of ingredients (Ic) notably include: fire retardants, drying agents, surfactants, inorganic UV absorbers, hindered amine light stabilizers (HALS), dispersants, water repellent agents, biocides such as pesticides, herbicides, insecticides, weedicides, miticides, fungicides, moldicides, algaecides, acaricides, nematicides, bactericides, rodenticides, wetting agents, plasticizers, defoaming agents, coalescing agents, fragrances, or mixtures of two or more thereof.

As non-limiting examples, suitable inorganic UV absorbers notably include TiO₂, ZnO, CeO₂, iron oxides, or mixtures of two or more thereof.

As non-limiting examples, suitable drying agents notably include naphthenates, tallates, decanoates, dodecanoates, neodecanoates, octoates of cobalt, manganese, lead, zirconium, calcium, barium, zinc, cerium, cerium/lanthanum, iron, neodymium, bismuth, vanadium, or mixtures of two or more thereof. Alternatively, also non-conventional drying agents may be used such as aluminium alkoxides. Furthermore, complex amines such as 1,10-phenanthrolene and 2,2-dipyridyl may be added as synergists to the drying agents.

As to the amount of the ingredients (Ic), it is understood that the skilled person in the art will practise said additional ingredients (Ic) in a suitable amount according to standard and general practice known by said skilled person in the art.

Generally, the amount of the ingredients (Ic), as detailed above, when present, is from 0.10 to 15.00 wt. %, or from 1.00 to 10.00 wt. %or from 2.00 to 8.00 wt. %, or from 3.00 to 7.00 wt. %, relative to the total dry weight of the composition (C).

According to a more preferred embodiment of the present invention, the composition (C), as detailed above, consists essentially of, relative to the total dry weight of the composition (C):
- from 45.00 to 60.00 % by weight [wt. %, herein after] of at least one modified alkyd resin [compound (A), herein after], wherein the compound (A) has a Gouge hardness of at least F as measured according to the standard ASTM D3363-20, and wherein the compound (A) is selected from the group consisting of a polyurethane modified alkyd resin, an acrylic modified alkyd resin, and an acrylic modified polyurethane-alkyd resin;
- at least one modified vegetable oil [compound (V), herein after], in which the vegetable oil is selected from the group consisting of linseed oil, sunflower oil, tung oil, and soybean oil, and wherein the compound (V) is present in an amount as determined by a dry weight ratio of compound (V) to compound (A) ranging from 0.20 to 0.28;
- from 3.00 to 6.50 wt. % of at least one cellulose compound chosen among microfibrillated cellulose (MFC) or cellulose nanocrystal (CNC);
- from 9.00 to 15.00 wt. % of at least one liquid non-polar organic UV absorber selected from 2-hydroxyphenyl-1,3,5-triazines, or 2-(2'-hydroxyphenyl)-benzotriazoles;
- from 5.00 to 18.00 wt. % of at least one micronized wax (Mₚ), as detailed above;
- from 0.00 to 15.00 wt. % of at least one pigment, as detailed above; and
- from 2.00 to 8.00 wt. % of at least one ingredient (Ic), as detailed above.

According to a most preferred embodiment of the present invention, the composition (C), as detailed above, consists essentially of, relative to the total dry weight of the composition (C):
- from 47.00 to 55.00 % by weight [wt. %, herein after] of at least one modified alkyd resin [compound (A), herein after], wherein the compound (A) has a Gouge hardness of at least H as measured according to the standard ASTM D3363-20, and wherein the compound (A) is selected from the group consisting of a polyurethane modified alkyd resin, an acrylic modified alkyd resin, and an acrylic modified polyurethane-alkyd resin;
- at least one modified vegetable oil [compound (V), herein after], in which the vegetable oil is linseed oil, and wherein the compound (V) is present in an amount as determined by a dry weight ratio of compound (V) to compound (A) ranging from 0.22 to 0.25;
- from 3.50 to 6.00 wt. % of at least one cellulose compound wherein the cellulose compound is microfibrillated cellulose (MFC);
- from 10.00 to 14.00 wt. % of at least one liquid non-polar organic UV absorber selected from 2-hydroxyphenyl-1,3,5-triazines, or 2-(2'-hydroxyphenyl)-benzotriazoles;
- from 10.00 to 15.00 wt. % of at least one micronized wax (Mₚ), as detailed above;
- from 0.00 to 10.00 wt. % of at least one pigment, as detailed above; and
- from 3.00 to 7.00 wt. % of at least one ingredient (Ic), as detailed above.

For the purpose of the present invention, the expression "consists essentially of" is intended to denote that, relative to and in terms of the total dry weight of the composition (C), any additional ingredient different from the at least one compound (A), the at least one compound (V), the at least one cellulose compound, the at least one liquid non-polar organic UV absorber, the at least one micronized wax (Mₚ), the at least one pigment, and the at least one ingredient (Ic), is present in minor amounts in said composition (C), being understood that these latter do not substantially modify the properties of said composition (C).

According to certain embodiments of the present invention, the composition (C), as detailed above, is in the form of a gel, said gel having the consistency of a cream, thereby facilitating the application of the composition (C) to wood products without risking any leaks, especially when the composition (C) is applied to vertical wood surfaces and ceilings. Within the context of the present invention, the term "gel" is intended to denote a colloid in a more solid form than a sol. This gel structure of the composition (C) is obtained by adapting the amount of the cellulose compound, as detailed above, as present in the composition (C). The greater the amount of the cellulose compound that is present in the composition (C), the higher the stiffness of the gel structure of said composition (C).

Another aspect of the present invention is a method for the manufacturing of the composition (C), as detailed above.

It is further understood that all definitions and preferences, as described above, equally apply for all further embodiments, as described below.

The composition (C) of the present invention can be manufactured by a variety of methods known in the art. For manufacturing the composition (C) of the present invention, several methods known in the art may adequately be used.

In one embodiment of the present invention, the method for the manufacturing of the composition (C), as detailed above, comprises the following steps:
- Step A: the at least one liquid non-polar organic UV absorber, as detailed above, is first entirely admixed with at least part of the compound (V), as detailed above, thereby forming a first mixture;
- Step B: the first mixture is further admixed with the compound (A), as detailed above, the cellulose compound, as detailed above, optionally water, and optionally the remaining part of the compound (V) thereby forming a second mixture.

The method for the manufacturing of the composition (C), as detailed above, may comprise a further Step (C) wherein the second mixture as obtained in Step B, as detailed above, is further admixed with one or more of the at least one solid non-polar organic UV absorber, as detailed above, the micronized wax (Mₚ), as detailed above, the at least one pigment, as detailed above, the at least one additional ingredient (Ic), as detailed above, wherein the admixing of the at least one solid non-polar organic UV absorber is carried out at a temperature higher than the melting point of said solid non-polar organic UV absorber, and wherein the admixing of the micronized wax (Mₚ) is carried out at a temperature lower than the melting point of said micronized wax (Mₚ).

Preferably, in Step A of the method for the manufacturing of the composition (C), as detailed above, the at least one liquid non-polar organic UV absorber, as detailed above, is entirely admixed with the total amount of the compound (V), as detailed above.

Preferably, in Step A and in Step B of the method for the manufacturing of the composition (C), as detailed above, the admixing of the components as comprised in the composition (C) is carried out at 20 °C and at atmospheric pressure.

Generally said admixing, as detailed above, may be carried out by using traditional mixers and blenders, high intensity mixers and electric stirrers, said mixers, blenders and stirrers which can be equipped with at least one dispersion disk.

Non-limiting examples of high intensity mixers notably include those high intensity mixers as commercially available from Dispermill, and from ROSS Mixers.

Non-limiting examples of dispersion disks notably include those dispersion disks as commercially available from Dispermill.

It is understood that the skilled person in the art will carry out said according to general practice such as notably using optimal times, speeds, weights, volumes and batch quantities.

Another aspect of the present invention is a method for treating a surface or at least part of a surface of a wood product wherein said wood product is treated with the composition (C), as detailed above.

It is further understood that all definitions and preferences, as described above, equally apply for all further embodiments, as described below.

As non-limiting examples of suitable wood products mention may be made of decking, siding, siding cladding, roof shingles, furniture, veneer, flooring, wood-based composite panels such as particle board (PB), hardboard, plywood, oriented strand board (OSB), flake board, chipboard and fibreboard such as medium density fibreboard (MDF), and high density fibreboard (HDF).

In general, the method for treating the surface or at least part of the surface of the wood product is not limited to wood products made of a particular type of wood.

Non-limiting examples of suitable types of wood notably include i. hardwood such as woods from dicotyledonous trees such as ash, mahogany, troko, beech, oak, maple, birch, walnut, teak, alder, aspen, elm, gum, poplar or willow, ii. softwood such as woods from coniferous trees such as larch, pine, fir, Douglas fir, hemlock, redwood, or spruce, or iii. certain other lignocellulosic materials such as bamboo, or hemp.

As non-limiting examples, suitable hardwood floorings notably include solid hardwood flooring such as solid parquet, or engineered hardwood flooring such as engineered parquet.

Preferred wood products are chosen among solid hardwood flooring, or engineered hardwood flooring.

Among the suitable manners for applying the composition (C), as detailed above, to the surface or at least part of the surface of the wood products, as detailed above, mention can be notably made of conventional application methods known to those skilled in the art of wood coating compositions such as brushing or spraying.

If desired, prior to application of the composition (C), as detailed above, the surface or at least part of the surface of the wood products is preliminary roughened up, such as by mechanical abrasion.

The composition (C) can be applied to the surface or at least part of the surface of wood products in low amounts, in particular for obtaining a transparent coated layer, for instance in an amount (wet basis) from 40.0 gram per square meter [g/m², herein after] to 250.0 g/m², preferably from 50.0 g/m² to 150.0 g/m², preferably from 60.0 to 100.0 g/m², thereby resulting in thin coated layers, for instance with an average thickness from 15.0 to 130.0 micron after drying and curing, preferably from 20.0 to 100.0 micron, preferably from 25.0 to 50.0 micron.

Another aspect of the present invention is a coated layer obtained by the method for treating the surface or at least part of the surface of the wood product, as detailed above, wherein said wood product is treated with the composition (C), as detailed above.

It is further understood that all definitions and preferences, as described above, equally apply for all further embodiments, as described below.

The inventors have surprisingly found that by treating the surface or at least part of the surface of wood products with the composition (C), as detailed above, the resulting coated layer now demonstrates an increased stability against UV radiation, while maintaining good mechanical properties in terms of hardness, and good workability in terms of wet edge time, as demonstrated in the experimental section. Furthermore, the inventors have surprisingly found that, despite the presence of high amounts of the at least one liquid non-polar organic UV absorber in the composition (C), no segregation, phase separation, migration, or droplet formation occurred within coated layers comprising said composition (C), as demonstrated in the experimental section.

The application of the composition (C) to the surface or at least part of the surface of wood products can result in thin coated layers, for instance coated layers with an average thickness from 15.0 to 130.0 micron after drying and curing, preferably from 20.0 to 100.0 micron, preferably from 25.0 to 50.0 micron.

Another aspect of the present invention is a use of the composition (C), as detailed above, in the method for treating the surface or at least part of the surface of the wood product, as detailed above.

### EXAMPLES

The invention will be now described in more details with reference to the following examples, whose purpose is merely illustrative and not intended to limit the scope of the invention. All mixing ratios, contents and concentrations in this text are given in units of weight and percent by weight unless otherwise stated.

### General analytical test methods

### Hardness of the compound (A)

### Via pencil Gouge hardness:

The measurements regarding the pencil Gouge hardness of the compound (A) according to the present invention, as detailed above, were performed according to the standard ASTM D3363-20 whereby the following method and measurement parameters were additionally taken into account:
- the compound (A) was applied to a Form P123-10N Leneta White Scrub Test Panel, commercially available from Leneta, using a wire bar until a dry layer thickness of 20 to 30 µm of the compound (A) was obtained after drying and curing;
- samples were dried during 30 days at a temperature of 20 °C and a relative humidity of 50 %; and
- pencils were used commercially available from Mitsubishi.

The Gouge hardness is defined by the hardest pencil that will leave the coated layer of the compound (A) uncut for a stroke length distance of at least 3.2 mm (1/8 inch).

The experimentally determined values of the pencil Gouge hardness were expressed according to the following scale ascending from softest to hardest: 6B, 5B, 4B, 3B, 2B, B, HB, F, H, 2H, 3H, 4H, 5H, 6H, 7H, 8H, and 9H.

### Hardness of the composition (C)

### Via pencil Gouge hardness:

The measurements regarding the pencil Gouge hardness of the composition (C), according to the present invention, as detailed above, were performed according to the standard ASTM D3363-20 whereby the following method and measurement parameters were additionally taken into account:
- the composition (C) was applied to a Form P123-10N Leneta White Scrub Test Panel, commercially available from Leneta, using a wire bar until a wet layer thickness of 100 µm was obtained (i.e. on a wet basis);
- samples were dried during 30 days at a temperature of 20 °C and a relative humidity of 50 %; and
- pencils were used commercially available from Mitsubishi.

The Gouge hardness is defined by the hardest pencil that will leave the coated layer of the composition (C) uncut for a stroke length distance of at least 3.2 mm (1/8 inch).

The experimentally determined values of the pencil Gouge hardness were expressed according to the following scale ascending from softest to hardest: 6B, 5B, 4B, 3B, 2B, B, HB, F, H, 2H, 3H, 4H, 5H, 6H, 7H, 8H, and 9H.

### Wet edge time of the composition (C)

The wet edge time of the composition (C) according to the present invention, as detailed above, was measured according to the methodology as described below:
- regarding the assessment of the wet edge time of the composition (C), said composition (C) was in this case specifically provided with a negligible amount of a black pigment merely for improving the visibility of the wet edges (i.e. 0.12 wt. % of Aquacolors Black 601240, commercially available from Sioen, was added to the composition (C), as calculated relative to the total weight of the composition (C) before addition of the black pigment);
- pine wood boards were first sanded with sandpaper characterized by a grain size of 120 until a scratch-free surface was obtained;
- the pine wood board was allowed to dry in a constant temperature (22.5 °C) and humidity room (38.4 %) for 24 hours;
- a first stroke of the composition (C) was applied with a brush on the pine wood board in the longitudinal direction thereof;
- applied layer thickness of the composition (C) on a wet basis = 70 µm;
- then, the composition (C) was applied with a brush in various perpendicular sections, brushing each section across the initially applied longitudinal section with 10 strokes (back and forth is one stroke);
- the perpendicular sections were repeated at 1 minute time intervals;
- the wet edge time was determined via the recording of the time at which the edges of the applied first stroke of the composition (C) became visible.

### Compatibility of the liquid non-polar organic UV absorber in the composition (C)

### i. Stability against phase separation of the composition (C) via visual observations upon standing:

Closed transparent containers made of plastic were each individually filled with equal amounts of the compositions (C), as detailed above. Subsequently, the respective containers were left untouched for a period of 1 day at 20 °C. After this 1 day at 20 °C, these containers were visually compared with the naked eye and precisely evaluated regarding their stability against phase separation. Special attention was given to any formation of oily droplets floating on top of the composition (C).

### ii. Droplet formation and phase separation within a coated layer

The composition (C) was applied to a Form P123-10N Leneta White Scrub Test Panel, commercially available from Leneta, using a wire bar until a layer thickness of 100 µm of the composition (C) on a wet basis was obtained. The product was allowed to dry in a constant temperature (22.5 °C) and humidity room (38.4 %) for 24 hours prior to rating the results. Then, the coated layer so obtained was visually analyzed with the naked eye upon the presence of any droplets within said coated layer. When droplets were present within the coated layer, it was further experimentally confirmed via Fourier-transform infrared spectroscopy that these droplets contained mainly the liquid non-polar organic UV absorber.

**Table 1: components used in the compositions of the Examples and in the compositions of the Comparative Examples**

| **Compound (A)** | **Company** | **Description** |
|---|---|---|
| Resydrol AY 6705w/44WA | Allnex | oxidatively drying acrylic modified alkyd resin as aqueous emulsion (44 wt. % solids content in water as measured in accordance with DIN 55671) |
| | | Gouge hardness as measured according to the standard ASTM D3363-20 = H |
| Resydrol AZ 6710w/41WA | Allnex | oxidatively drying, polyurethane modified and acryl modified alkyd emulsion (41 wt. % solids content in water as measured in accordance with DIN 55671) |
| | | Gouge hardness as measured according to the standard ASTM D3363-20 = H |
| NeoPac PU485 | DSM | an alkyd dispersion modified with aliphatic polyurethane (42 wt. % solids content in water) |
| | | Gouge hardness as measured according to the standard ASTM D3363-20 = H |

| **Compound (V)** | **Company** | **Description** |
|---|---|---|
| Resydrol VAL 5547w | Allnex | oxidatively drying, water dilutable, modified linseed oil (98 wt. % solids content in water) |

| **Cellulose compound** | **Company** | **Description** |
|---|---|---|
| Exilva f 01-v | Borregaard | microfibrillated cellulose (MFC) |
| | | (10 wt. % solids content in water) |

| **Liquid non-polar organic UV absorber** | **Company** | **Description** |
|---|---|---|
| Tinuvin^{®} 384-2 | BASF | 93 wt. % benzenepropanoic acid, 3-(2H-benzotriazol-2-yl)-5-(1, 1-dimethylethyl)- 4-hydroxy-, C7-9-branched and linear alkyl esters (in 7 wt. % 1-methoxy-2-propyl-acetate) |
| Tinuvin^{®} 400 | BASF | 85 wt. % mixture of 2-[4-[(2-hydroxy-3-dodecyloxypropyl)oxy]-2-hydroxyphenyl]- 4,6-bis(2,4-dimethylphenyl)-1,3,5-triazine and 2-[4-[(2-hydroxy-3-tridecyloxypropyl)oxy]-2-hydroxy phenyl]-4,6-bis(2,4-dimethylphenyl)-1,3,5-triazine (in 15 wt. % 1-methoxypropan-2-ol) |
| Tinuvin^{®} 477 | BASF | 85 wt. % isomer mix of bis-, tris- and tetra-iso-octyl-substituted tris-resorcinol triazine (in 15 wt. % 1-methoxy-2-propyl-acetate) |
| **Water** | - | - |

| **Additional ingredients (I_{C})** | **Company** | **Description** |
|---|---|---|
| drying agent: Borchi OXY-Coat 1101 | Borchers | iron complex |

| **Pigment** | **Company** | **Description** |
|---|---|---|
| Aquacolors Black 601240 | Sioen | pigment preparation based on carbon black |

### General procedure for manufacturing composition (C) according to the present invention:

Reference is hereby made to the above Table 1 with respect to the various components used in the compositions of the Examples and used in the compositions of the Comparative Examples. The exact compositions of the Examples and the exact compositions of the Comparative Examples, with respect to the type of components contained therein and the related quantities thereof, are respectively described in Tables 2 - 6 below.

In a first step (i.e. Step A of the method for the manufacturing of the composition (C)), a liquid non-polar organic UV absorber was entirely admixed with the total amount of a modified vegetable oil, i.e. a compound (V), at 20 °C and at atmospheric pressure and using a high intensity mixer, the mixer being equipped with a dispersion disk, thereby forming a first mixture. In a following step (i.e. Step B of the method for the manufacturing of the composition (C)), the obtained first mixture is further admixed with the compound (A), the cellulose compound, and water, at 20 °C and at atmospheric pressure and using the same high intensity mixer thereby forming a second mixture. Then, in a following step (i.e. Step C of the method for the manufacturing of the composition (C)), the obtained second mixture is further admixed with a drying agent as an additional ingredient (Ic) at 20 °C and at atmospheric pressure and using the same high intensity mixer.

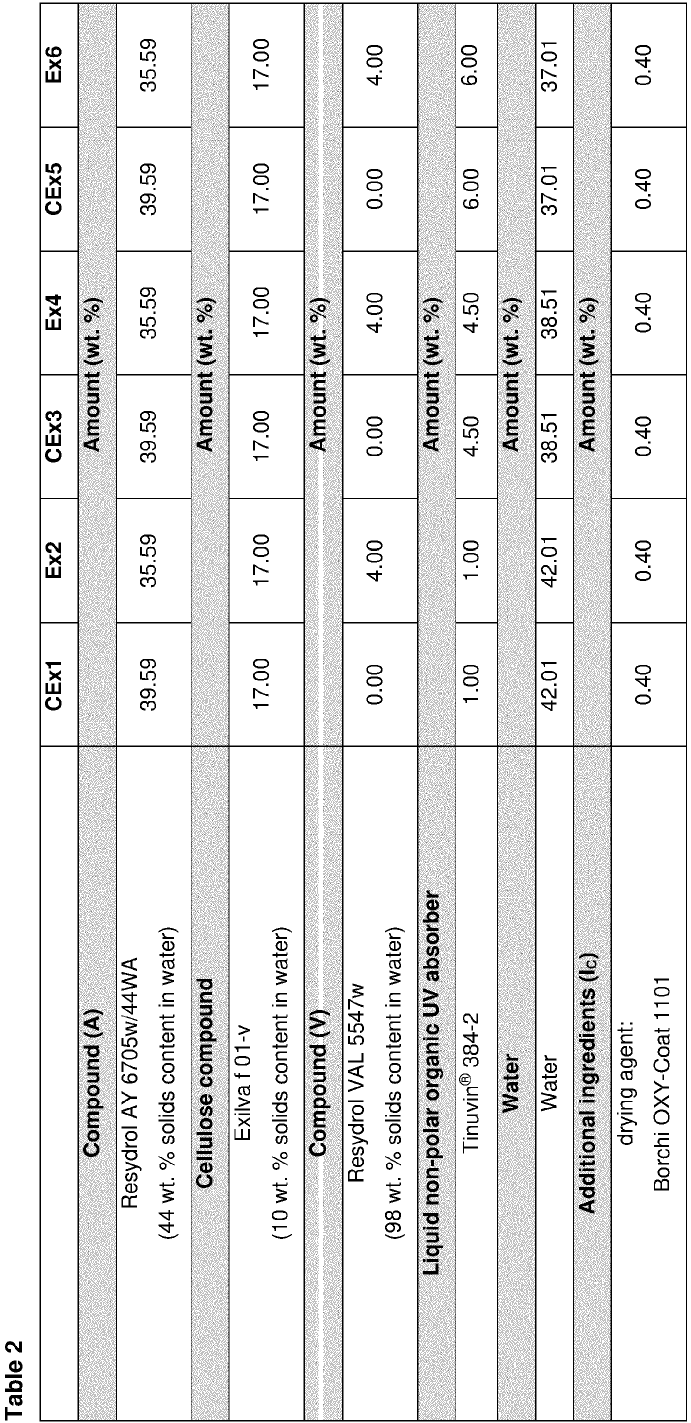

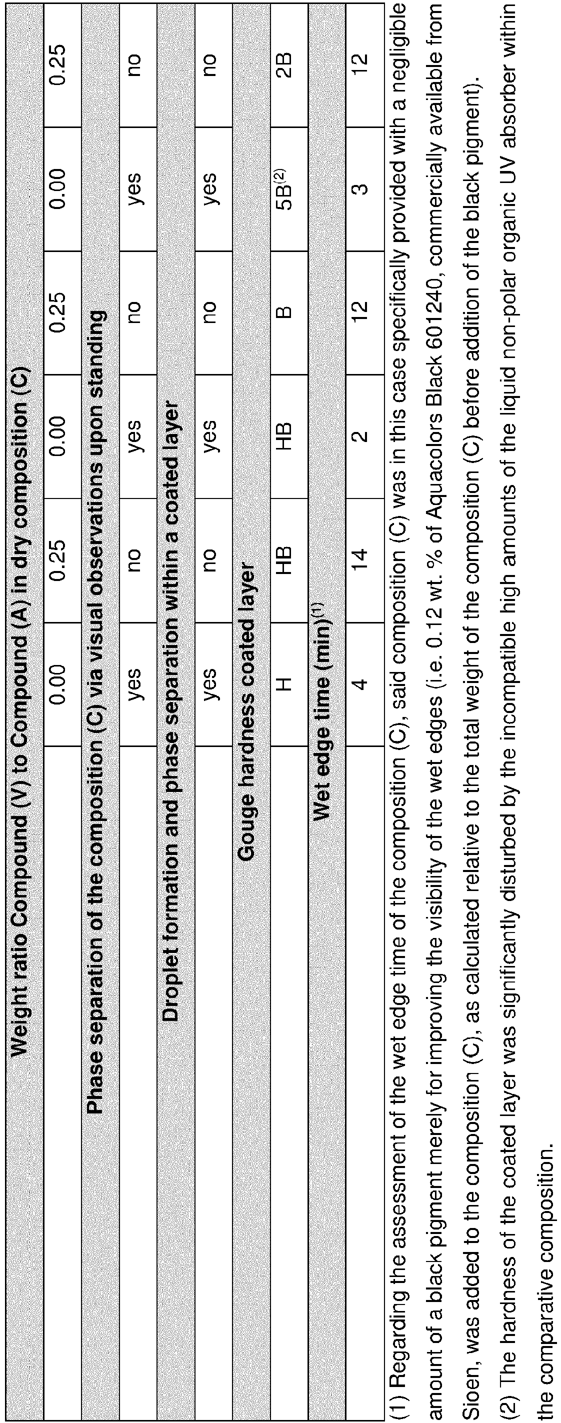

The experimental results as shown in Table 2 first of all clearly demonstrate that the presence of the compound (V) in the compositions (C) according to the present invention, i.e. Ex2, Ex4, and Ex6, provides an increased stability of said compositions (C) against phase separation upon standing, which even holds when significantly increased amounts of the liquid non-polar organic UV absorber are present within these compositions (C). However, upon comparison with the comparative compositions which do not contain any compound (V), i.e. CEx1, CEx3, and CEx5, phase separation of these compositions was clearly observed after 1 day at 20 °C, even when significantly lower amounts of the liquid non-polar organic UV absorber were incorporated therein. Furthermore, phase separation and droplet formation occurred as well in coated layers of CEx1, CEx3, and CEx5, while on the other hand such observations were not made in case of coated layers of the compositions (C) according to the present invention, i.e. Ex2, Ex4, and Ex6. On the contrary, coated layers of Ex2, Ex4, and Ex6 did not show any phase separation or droplet formation.

Furthermore, the experimental results for Ex2, Ex4, and Ex6 demonstrate that although high amounts of the liquid non-polar organic UV absorber can now be successfully incorporated in these compositions (C), and in coated layers of these compositions (C), without any phase separation and droplet formation, good mechanical properties in terms of hardness and good workability in terms of wet edge time were maintained.

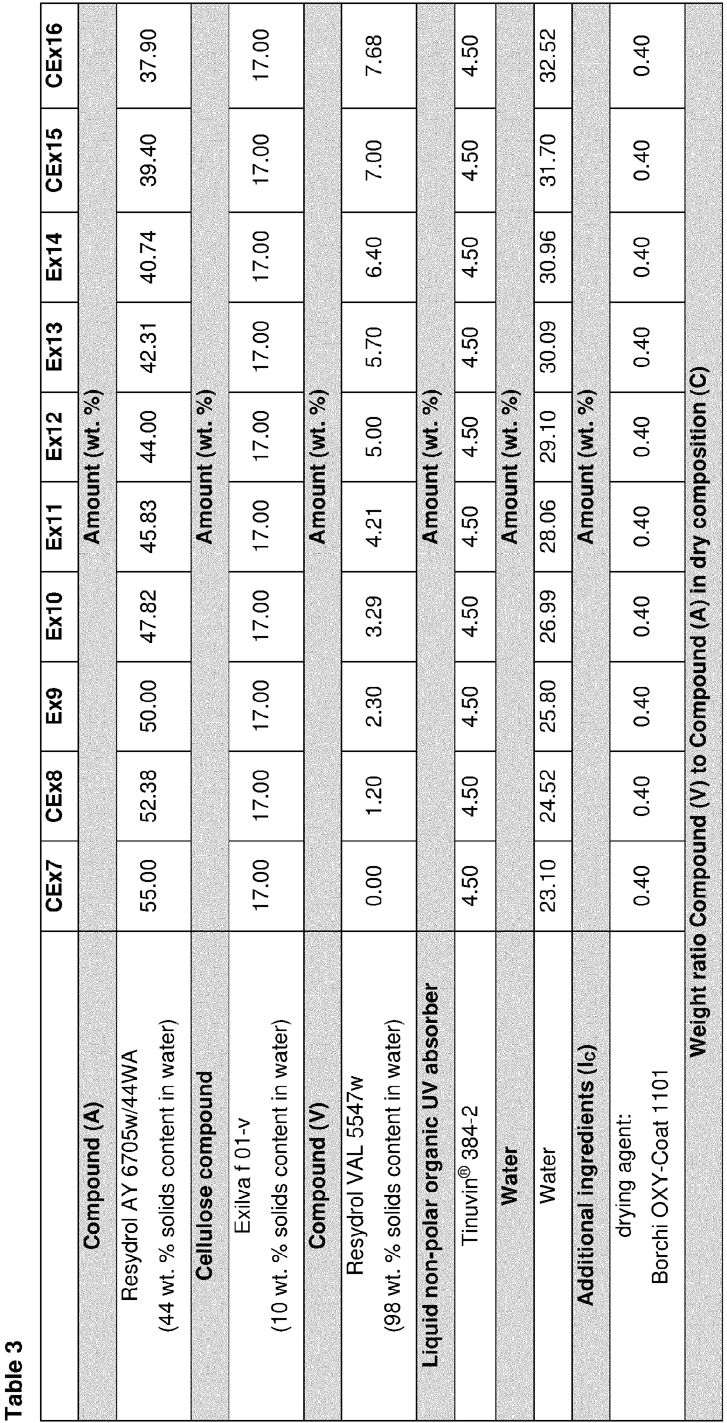

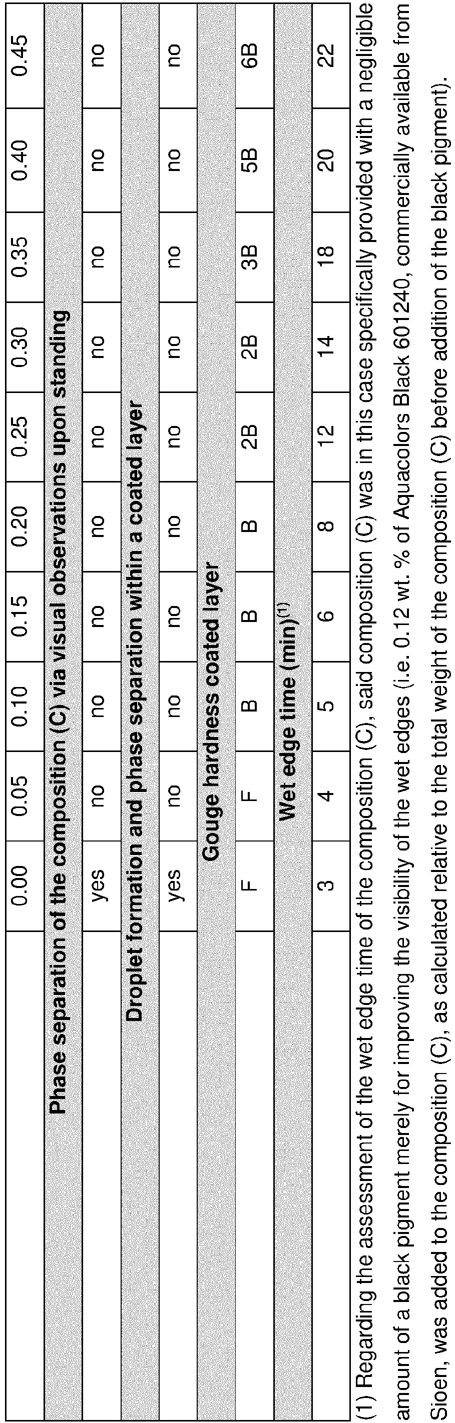

The experimental results as shown in Table 3 clearly demonstrate that part of the compound (A) can be replaced by an amount of the compound (V), whereby the amount of the compound (V) fulfills a defined dry weight ratio of compound (V) to compound (A), thereby allowing the composition (C) to successfully incorporate high amounts of a liquid non-polar organic UV absorber resulting in the composition (C) now having an increased stability against UV radiation, while maintaining good mechanical properties in terms of hardness, and good workability in terms of wet edge time.

In particular, Ex9 - Ex14 according to the present invention show that an amount of the compound (A) can be successfully replaced by an amount of the compound (V), thereby fulfilling a defined dry weight ratio of compound (V) to compound (A), in order to allow these compositions (C) to first of all incorporate high amounts of the liquid non-polar organic UV absorber without any phase separation of these compositions (C) and without any phase separation and droplet formation in coated layers of these compositions (C), and while maintaining good mechanical properties in terms of hardness, and good workability in terms of wet edge time. For instance, as already evidenced in previous Table 2, in the absence of any compound (V), phase separation and droplet formation was clearly observed for CEx7. However, the comparative compositions CEx8 and CEx15 - CEx16, which all concern compositions containing the compound (V), show inferior wet edge times or hardnesses, respectively, as a consequence of the amount of the compound (V) present in these compositions not fulfilling the defined dry weight ratio of compound (V) to compound (A).

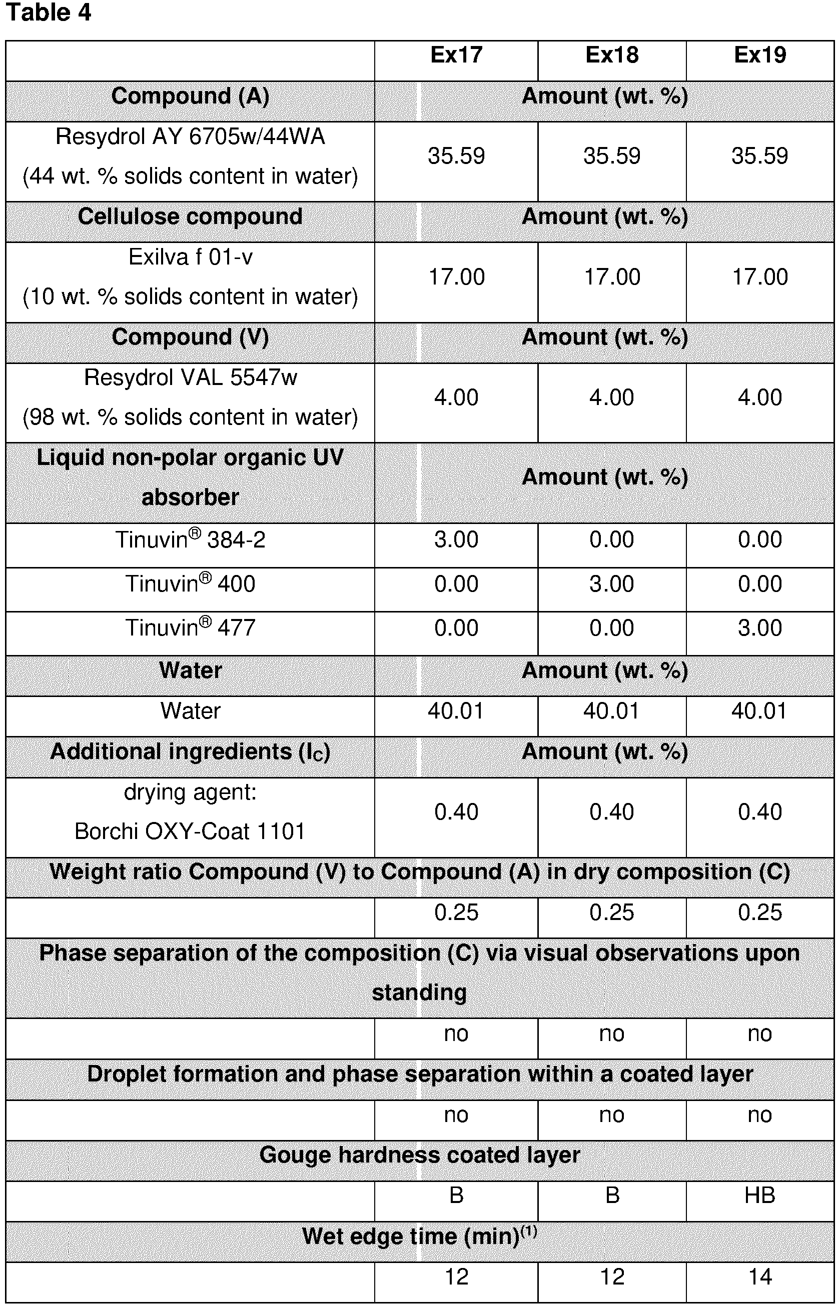

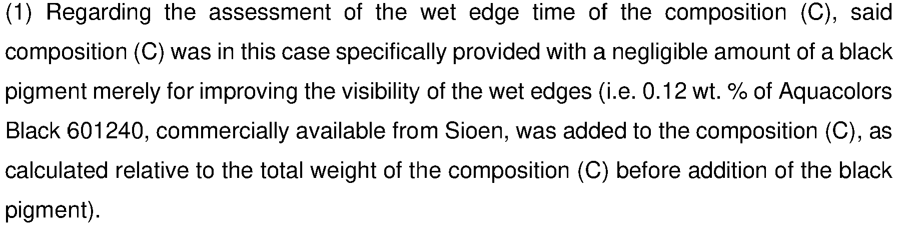

The experimental results as shown in Table 4 clearly demonstrate that the amount of the 2-(2-hydroxyphenyl)-benzotriazole based liquid non-polar organic UV absorber in Ex17 according to the present invention, can be successfully substituted or replaced by a 2-hydroxyphenyl-1,3,5-triazine based liquid non-polar organic UV absorber in Ex18 or Ex19 according to the present invention, while maintaining the same technical effects such as the ability to incorporate high amounts of the liquid non-polar organic UV absorber without any phase separation of these compositions (C) and without any phase separation and droplet formation in coated layers of these compositions (C), and while maintaining good mechanical properties in terms of hardness, and good workability in terms of wet edge time. More specifically, Ex17 - Ex19 only differ from each other in that the 2-(2-hydroxyphenyl)-benzotriazole based liquid non-polar organic UV absorber in Ex17 was now completely substituted in Ex18 and in Ex19 by an equal amount of a certain 2-hydroxyphenyl-1,3,5-triazine based liquid non-polar organic UV absorber.

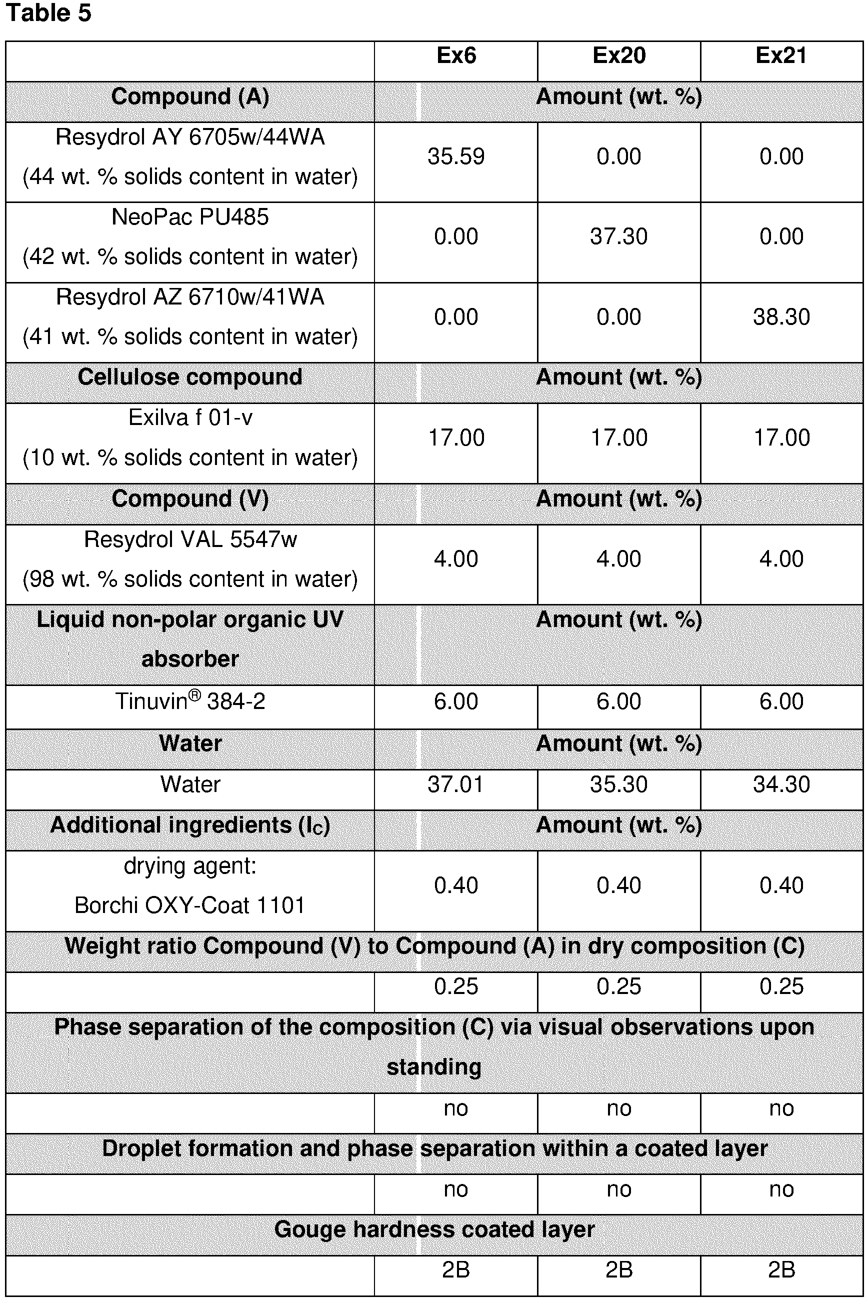

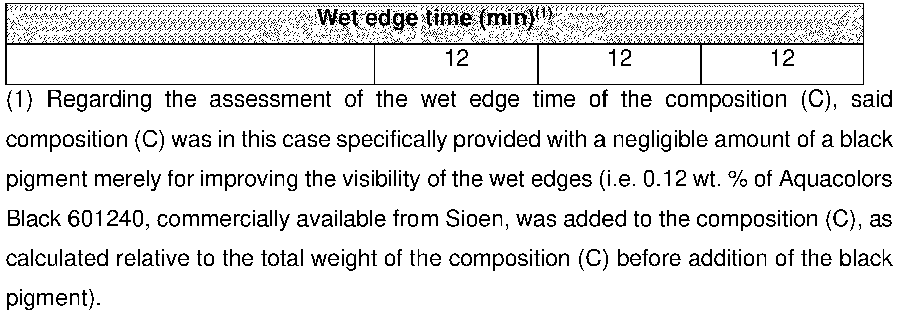

The experimental results as shown in Table 5 clearly demonstrate that the amount of the acrylic modified alkyd resin as the compound (A) in Ex6 according to the present invention, can be successfully substituted or replaced by a polyurethane modified alkyd resin as the compound (A) in Ex20 according to the present invention, or by an acrylic modified polyurethane-alkyd resin as the compound (A) in Ex21 according to the present invention, respectively, while maintaining the same technical effects such as the ability to incorporate high amounts of the liquid non-polar organic UV absorber without any phase separation of these compositions (C) and without any phase separation and droplet formation in coated layers of these compositions (C), and while maintaining good mechanical properties in terms of hardness, and good workability in terms of wet edge time. More specifically, Ex6 and Ex20 - Ex21 only differ from each other in that the acrylic modified alkyd resin as the compound (A) in Ex6 was now completely substituted in Ex20 and in Ex21 by a more or less equal amount of a polyurethane modified alkyd resin, or an acrylic modified polyurethane-alkyd resin, respectively.

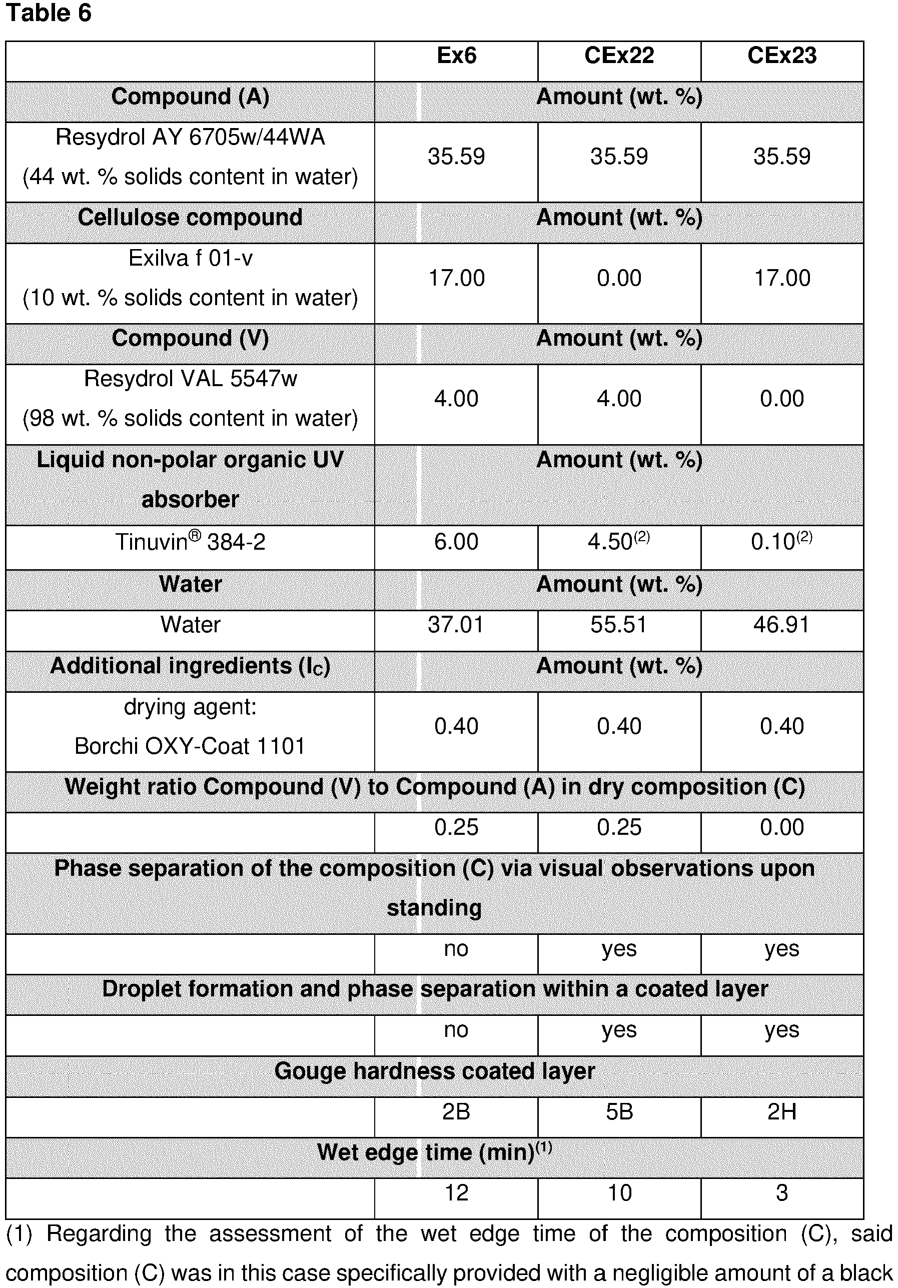

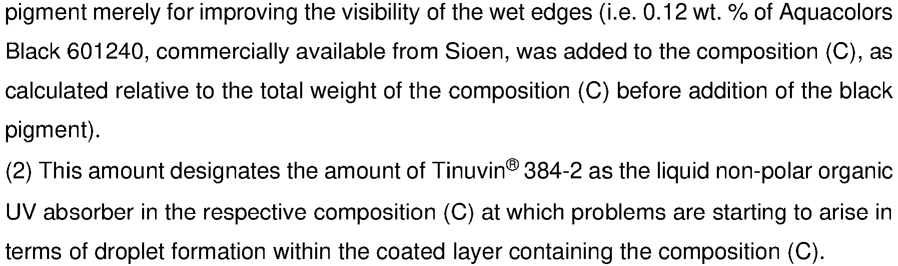

The experimental results as shown in Table 6 clearly demonstrate that the amount of the compound (V) as contained in the composition (C) synergistically interacts with the cellulose compound, thereby allowing the compositions (C) according to the present invention to successfully incorporate high amounts of a liquid non-polar organic UV absorber, while maintaining good properties in terms of hardness, and good workability in terms of wet edge time.

In particular, Ex6 according to the present invention successfully incorporates (at least) 6.00 wt. % of Tinuvin^{®} 384-2 without giving rise to any phase separation upon standing, or any phase separation and droplet formation in coated layers of Ex6, respectively. Furthermore, good mechanical properties in terms of hardness, and good workability in terms of wet edge time, were maintained in Ex6.

However, upon comparison with Ex6, the comparative composition of CEx22 does not contain any cellulose compound. Although CEx22 comprises a compound (V) in an amount which respectfully fulfills the defined dry weight ratio of compound (V) to compound (A), the incorporation of 4.50 wt. % of Tinuvin^{®} 384-2 already and clearly resulted in significant phase separation and droplet formation in the comparative composition and coated layers of said composition, respectively. Furthermore, CEx22 demonstrated a significantly reduced hardness.

In addition, upon comparison with Ex6, the comparative composition of CEx23 does not contain any compound (V). Although CEx21 comprises a cellulose compound, the incorporation of 0.10 wt. % of Tinuvin^{®} 384-2 already resulted in phase separation and droplet formation in the comparative composition and coated layers of said composition, respectively. Furthermore, CEx23 demonstrated an inferior wet edge time.

## Claims

1. An aqueous wood coating composition [composition (C), herein after] comprising, relative to the total dry weight of the composition (C):
- from 40.00 to 80.00 % by weight [wt. %, herein after] of at least one modified alkyd resin [compound (A), herein after], wherein the compound (A) has a Gouge hardness of at least F as measured according to the standard ASTM D3363-20;
- at least one modified vegetable oil [compound (V), herein after], in which the vegetable oil is selected from the group consisting of linseed oil, sunflower oil, tung oil, safflower oil, soybean oil, poppy seed oil, tall oil, corn oil, rice germ oil, cottonseed oil, fish oil, herring oil, grape seed oil, flaxseed oil, chia oil, oiticica oil, walnut oil, camelina oil, hemp seed oil, and perilla oil, and wherein the compound (V) is present in an amount as determined by a dry weight ratio of compound (V) to compound (A) ranging from 0.10 to 0.35;
- from 1.00 to 10.00 wt. % of at least one cellulose compound chosen among microfibrillated cellulose (MFC) or cellulose nanocrystal (CNC); and
- from 3.00 to 25.00 wt. % of at least one liquid non-polar organic UV absorber.

2. The composition (C) according to claim 1, wherein the composition (C) has a total solids content from 15.00 to 55.00 wt. %, preferably from 20.00 to 50.00 wt. %, preferably from 20.00 to 45.00 wt. %, preferably from 24.00 to 40.00 wt. %, preferably from 24.00 to 38.00 wt. %, preferably from 26.00 to 36.00 wt.%, relative to the total weight of the composition (C).

3. The composition (C) according to any one of claims 1 or 2, wherein the composition (C) comprises from 43.00 to 70.00 wt. %, preferably from 45.00 to 65.00 wt. %, more preferably from 45.00 to 60.00 wt. %, even more preferably from 47.00 to 55.00 wt. %, relative to the total dry weight of the composition (C), of the compound (A).

4. The composition (C) according to any one of claims 1 to 3, wherein the compound (A) is selected from the group consisting of a polyurethane modified alkyd resin, an acrylic modified alkyd resin, and an acrylic modified polyurethane-alkyd resin.

5. The composition (C) according to any one of claims 1 to 4, in which the vegetable oil of the compound (V) is selected from the group consisting of linseed oil, sunflower oil, tung oil, safflower oil, soybean oil, poppy seed oil, tall oil, fish oil, grapeseed oil, flaxseed oil, walnut oil, hemp seed oil, and perilla oil; more preferably selected from the group consisting of linseed oil, sunflower oil, tung oil, soybean oil, poppy seed oil, tall oil, walnut oil, hemp seed oil, and perilla oil; even more preferably selected from the group consisting of linseed oil, sunflower oil, tung oil, and soybean oil; most preferably the vegetable oil is linseed oil.

6. The composition (C) according to any one of claims 1 to 5, wherein the the dry weight ratio of compound (V) to compound (A) ranges from 0.15 to 0.30, preferably from 0.20 to 0.28, more preferably from 0.22 to 0.25.

7. The composition (C) according to any one of claims 1 to 6, wherein the composition (C) comprises from 1.50 to 8.00 wt. %, preferably from 2.00 to 7.00 wt. %, more preferably from 2.50 to 7.00 wt. %, more preferably from 3.00 to 6.50 wt. %, more preferably from 3.50 to 6.50 wt. %, more preferably from 3.50 to 6.00 wt. %, relative to the total dry weight of the composition (C), of the at least one cellulose compound.

8. The composition (C) according to any one of claims 1 to 7, wherein the at least one liquid non-polar organic UV absorber is selected from 2-hydroxyphenyl-1,3,5-triazines, or 2-(2'-hydroxyphenyl)-benzotriazoles.

9. The composition (C) according to any one of claims 1 to 8, wherein the composition (C) comprises from 5.00 to 20.00 wt. %, preferably from 5.00 to 18.00 wt. %, more preferably from 7.00 to 16.00 wt. %, more preferably from 9.00 to 15.00 wt. %, even more preferably from 10.00 to 14.00 wt. %, relative to the total dry weight of the composition (C), of the at least one liquid non-polar organic UV absorber.

10. The composition (C) according to any one of claims 1 to 9, wherein the composition (C) comprises at least one solid non-polar organic UV absorber.

11. The composition (C) according to any one of claims 1 to 10, wherein the composition (C) comprises at least one synthetic micronized wax [micronized wax (Mₚ), herein after] selected from the group consisting of micronized polytetrafluoroethylene wax, micronized hybrid wax of polyethylene-polytetrafluoroethylene wax, micronized Fischer-Tropsch wax, micronized polyethylene wax, micronized polypropylene wax, micronized polyamide wax, and micronized polymer hybrids thereof, said at least one synthetic micronized wax having a particle size D₉₀ equal to or less than 36 µm and a particle size D₅₀ equal to or less than 20 µm.

12. The composition (C) according to any one of claims 1 to 11, wherein the composition (C) comprises at least one pigment and/or at least one additional ingredient [ingredient (Ic), herein after] selected from the group consisting of fire retardants, drying agents, surfactants, inorganic UV absorbers, hindered amine light stabilizers (HALS), dispersants, water repellent agents, biocides such as pesticides, herbicides, insecticides, weedicides, miticides, fungicides, moldicides, algaecides, acaricides, nematicides, bactericides, rodenticides, wetting agents, plasticizers, defoaming agents, coalescing agents, and fragrances.

13. A method for the manufacturing of the composition (C), as defined in claims 1 to 9, wherein the method comprises the following steps:
- Step A: the at least one liquid non-polar organic UV absorber is first entirely admixed with at least part of the compound (V) thereby forming a first mixture;
- Step B: the first mixture is further admixed with the compound (A), the cellulose compound, optionally water, and optionally the remaining part of the compound (V) thereby forming a second mixture.

14. The method according to claim 13, wherein the method further comprises a step (C) wherein the second mixture as obtained in Step B is admixed with one or more of the at least one solid non-polar organic UV absorber, as defined in claim 10, the micronized wax (Mₚ), as defined in claim 11, the at least one pigment, as defined in claim 12, and the at least one additional ingredient (Ic), as defined in claim 12, wherein the admixing of the at least one solid non-polar organic UV absorber is carried out at a temperature higher than the melting point of said solid non-polar organic UV absorber, and wherein the admixing of the micronized wax (Mₚ) is carried out at a temperature lower than the melting point of said micronized wax (Mₚ).

15. A method of treating a surface or at least part of a surface of a wood product wherein said wood product is treated with the composition (C) according to any one of claims 1 to 12.

16. A coated layer obtained by the method according to claim 15.

## Patentansprüche

1. Eine wässrige Holzbeschichtungszusammensetzung [nachstehend Zusammensetzung (C)], welche, in Bezug auf das Gesamttrockengewicht der Zusammensetzung (C), Folgendes umfasst:
- von 40,00 bis 80,00 Gewichtsprozent [nachstehend Gew.-%] von zumindest einem modifizierten Alkydharz [nachstehend Verbindung (A)], wobei die Verbindung (A) eine Gouge-Härte von mindestens F, wie gemessen nach der ASTM-Norm D3363-20, hat;
- zumindest ein modifiziertes Pflanzenöl [nachstehend Verbindung (V)], wobei das Pflanzenöl ausgewählt ist aus der Gruppe bestehend aus Leinöl, Sonnenblumenöl, Tungöl, Färberdistelöl, Sojabohnenöl, Mohnsamenöl, Tallöl, Maisöl, Reiskeimöl, Baumwollsamenöl, Fischöl, Heringöl, Traubenkernöl, Leinsamenöl, Chiaöl, Oiticicaöl, Walnussöl, Camelinaöl, Hanfsamenöl, und Perillaöl, und wobei die Verbindung (V) in einer Menge vorhanden ist, wie bestimmt durch ein Trockengewichtsverhältnis von Verbindung (V) zu Verbindung (A) von 0,10 bis 0,35;
- von 1,00 bis 10,00 Gew.-% von zumindest einer Celluloseverbindung gewählt aus mikrofibrillierter Cellulose (MFC) oder nanokristalliner Cellulose (CNC); und
- von 3,00 bis 25,00 Gew.-% von zumindest einem nichtpolaren organischen UV-Absorbtionsmittel.

2. Die Zusammensetzung (C) nach Anspruch 1, wobei die Zusammensetzung (C) einen Gesamt-Feststoffgehalt von 15,00 bis 55,00 Gew.-%, bevorzugt von 20,00 bis 50,00 Gew.-%, bevorzugt von 20,00 bis 45,00 Gew.-%, bevorzugt von 24,00 bis 40,00 Gew.-%, bevorzugt von 24,00 bis 38,00 Gew.-%, bevorzugt von 26,00 bis 36,00 Gew.-%, in Bezug auf das Gesamtgewicht der Zusammensetzung (C), hat.

3. Die Zusammensetzung (C) nach irgendeinem der Ansprüche 1 oder 2, wobei die Zusammensetzung (C) von 43,00 bis 70,00 Gew.-%, bevorzugt von 45,00 bis 65,00 Gew.-%, noch besser von 45,00 bis 60,00 Gew.-%, sogar noch besser von 47,00 bis 55,00 Gew.-%, in Bezug auf das Gesamttrockengewicht der Zusammensetzung (C), der Verbindung (A) umfasst.

4. Die Zusammensetzung (C) nach irgendeinem der Ansprüche 1 bis 3, wobei die Verbindung (A) ausgewählt ist aus der Gruppe bestehend aus einem polyurethan-modifizierten Alkydharz, einem acryl-modifizierten Alkydharz, und einem acryl-modifizierten Polyurethan-Alkydharz.

5. Die Zusammensetzung (C) nach irgendeinem der Ansprüche 1 bis 4, in der das Pflanzenöl der Verbindung (V) ausgewählt ist aus der Gruppe bestehend aus Leinöl, Sonnenblumenöl, Tungöl, Färberdistelöl, Sojabohnenöl, Mohnsamenöl, Tallöl, Fischöl, Traubenkernöl, Leinsamenöl, Walnussöl, Hanföl, und Perillaöl; noch besser ausgewählt ist aus der Gruppe bestehend aus Leinöl, Sonnenblumenöl, Tungöl, Sojabohnenöl, Mohnsamenöl, Tallöl, Walnussöl, Hanfsamenöl, und Perillaöl; sogar noch besser ausgewählt ist aus der Gruppe bestehend aus Leinöl, Sonnenblumenöl, Tungöl, und Sojabohnenöl; am besten ist das Pflanzenöl Leinöl.

6. Die Zusammensetzung (C) nach irgendeinem der Ansprüche 1 bis 5, wobei das Trockengewichtsverhältnis von Verbindung (V) zu Verbindung (A) von 0,15 bis 0,30 beträgt, bevorzugt von 0,20 bis 0,28, noch besser von 0,22 bis 0,25.

7. Die Zusammensetzung (C) nach irgendeinem der Ansprüche 1 bis 6, wobei die Zusammensetzung (C) von 1,50 bis 8,00 Gew.-%, bevorzugt von 2,00 bis 7,00 Gew.-%, noch besser von 2,50 bis 7,00 Gew.-%, noch besser von 3,00 bis 6,50 Gew.-%, noch besser von 3,50 bis 6,50 Gew.-%, noch besser von 3,50 bis 6,00 Gew.-%, in Bezug auf das Gesamttrockengewicht der Zusammensetzung (C), der zumindest einen Celluloseverbindung umfasst.

8. Die Zusammensetzung (C) nach irgendeinem der Ansprüche 1 bis 7, wobei das zumindest eine flüssige nichtpolare organische UV-Absorbtionsmittel ausgewählt ist aus 2-Hydroxyphenyl-1,3,5-Triazinen, oder 2-(2'-Hydroxyphenyl)-Benzotriazolen.

9. Die Zusammensetzung (C) nach irgendeinem der Ansprüche 1 bis 8, wobei die Zusammensetzung (C) von 5,00 bis 20,00 Gew.-%, bevorzugt von 5,00 bis 18,00 Gew.-%, noch besser von 7,00 bis 16,00 Gew.-%, noch besser von 9,00 bis 15,00 Gew.-%, sogar noch besser von 10,00 bis 14,00 Gew.-%, in Bezug auf das Gesamttrockengewicht der Zusammensetzung (C), des zumindest einen flüssigen nichtpolaren organischen UV-Absorptionsmittels umfasst.

10. Die Zusammensetzung (C) nach irgendeinem der Ansprüche 1 bis 9, wobei die Zusammensetzung (C) zumindest ein festes nichtpolares organisches UV-Absorptionsmittel umfasst.

11. Die Zusammensetzung (C) nach irgendeinem der Ansprüche 1 bis 10, wobei die Zusammensetzung (C) zumindest ein synthetisches mikronisiertes Wachs [nachstehend mikronisiertes Wachs (Mₚ)] ausgewählt aus der Gruppe bestehend aus mikronisiertem Polytetrafluorethylenwachs, mikronisiertem Hybridwachs von Polyethylen-Polytetrafluorethylenwachs, mikronisiertem Fischer-Tropsch-Wachs, mikronisiertem Polyethylenwachs, mikronisiertem Polypropylenwachs, mikronisiertem Polyamidwachs, und mikronisierten Polymerhybriden davon umfasst, wobei das zumindest eine synthetische mikronisierte Wachs eine Korngröße D₉₀ von gleich oder weniger als 36 µm und eine Korngröße D₅₀ von gleich oder weniger als 20 µm hat.

12. Die Zusammensetzung (C) nach irgendeinem der Ansprüche 1 bis 11, wobei die Zusammensetzung (C) zumindest ein Pigment und/oder zumindest einen zusätzlichen Bestandteil [nachstehend Bestandteil (I_{C})] ausgewählt aus der Gruppe bestehend aus Brandhemmern, Trockenmitteln, oberflächenaktiven Substanzen, anorganischen UV-Absorbtionsmitteln, gehinderten Amin-Lichtstabilisatoren (HALS), Dispergiermitteln, Hydrophobierungsmitteln, Bioziden wie Pestizide, Herbizide, Insektizide, Unkrautvernichtungsmittel, Mitizide, Fungizide, Moldizide, Algizide, Akarizide, Nematizide, Bakterizide, Rodentizide, Netzmitteln, Weichmachern, Entschäumungsmitteln, Koaleszenzmitteln, und Duftstoffen umfasst.

13. Ein Verfahren zur Herstellung der Zusammensetzung (C), wie definiert in den Ansprüchen 1 bis 9, wobei das Verfahren die folgenden Schritte umfasst:
- Schritt A: das zumindest eine flüssige nichtpolare organische UV-Absorptionsmittel wird zuerst zur Gänze mit mindestens einem Teil der Verbindung (V) vermischt, wodurch eine erste Mischung entsteht;
- Schritt B: die erste Mischung wird weiter mit der Verbindung (A), der Celluloseverbindung, optional Wasser, und optional dem verbleibenden Teil der Verbindung (V) vermischt, wodurch eine zweite Mischung entsteht.

14. Das Verfahren nach Anspruch 13, wobei das Verfahren ferner einen Schritt (C) umfasst, in dem die zweite Mischung, wie erhalten in Schritt B, mit einem oder mehreren Bestandteilen von dem zumindest einen festen nichtpolaren organischen UV-Absorptionsmittel, wie definiert in Anspruch 10, dem mikronisierten Wachs (Mₚ), wie definiert in Anspruch 11, dem zumindest einen Pigment, wie definiert in Anspruch 12, und dem zumindest einen weiteren Bestandteil (I_{C}), wie definiert in Anspruch 12, vermischt wird, wobei das Beimischen des zumindest einen festen soliden nichtpolaren organischen UV-Absorptionsmittels bei einer Temperatur über dem Schmelzpunkt des festen nichtpolaren organischen UV-Absorptionsmittels durchgeführt wird, und wobei das Beimischen des mikronisierten Wachses (Mₚ) bei einer Temperatur unter dem Schmelzpunkt des mikronisierten Wachses (Mₚ) durchgeführt wird.

15. Ein Verfahren zum Behandeln einer Oberfläche oder von zumindest einem Teil einer Oberfläche eines Holzprodukts, wobei das Holzprodukt mit der Zusammensetzung (C) nach irgendeinem der Ansprüche 1 bis 12 behandelt wird.

16. Eine Beschichtung erhalten durch das Verfahren nach Anspruch 15.

## Revendications

1. Composition aqueuse de revêtement de bois [composition (C), ci-après] comprenant, par rapport au poids sec total de la composition (C) :
- de 40,00 à 80,00 % en poids [% en poids, ci-après] d'au moins une résine alkyde modifiée [composé (A), ci-après], dans laquelle le composé (A) présente une dureté à la gouge d'au moins F, mesurée selon la norme ASTM D3363-20 ;
- au moins une huile végétale modifiée [composé (V), ci-après], dans laquelle l'huile végétale est choisie dans le groupe constitué de l'huile de lin, l'huile de tournesol, l'huile de tung, l'huile de carthame, l'huile de soja, l'huile de pavot, l'huile de tall, l'huile de maïs, l'huile de germe de riz, l'huile de graines de coton, l'huile de poisson, l'huile de hareng, l'huile de pépins de raisin, l'huile de graines de lin, l'huile de chia, l'huile d'oïticica, l'huile de noix, l'huile de caméline, l'huile de chanvre et l'huile de périlla, et dans laquelle le composé (V) est présent en une quantité déterminée par un rapport en poids sec entre le composé (V) et le composé (A) allant de 0.10 à 0,35 ;
- de 1,00 à 10,00 % en poids d'au moins un composé de cellulose choisi parmi la cellulose microfibrillée (MFC) ou les nanocristaux de cellulose (CNC) ; et
- de 3,00 à 25,00 % en poids d'au moins un absorbeur UV organique non polaire liquide.

2. Composition (C) selon la revendication 1, dans laquelle la composition (C) a une teneur totale en solides de 15,00 à 55,00 % en poids, de préférence de 20,00 à 50,00 % en poids, de préférence de 20,00 à 45,00 % en poids, de préférence de 24,00 à 40,00 % en poids, de préférence de 24,00 à 38,00 % en poids, de préférence de 26,00 à 36,00 % en poids, par rapport au poids total de la composition (C).

3. Composition (C) selon l'une quelconque des revendications 1 ou 2, dans laquelle la composition (C) comprend de 43,00 à 70,00 % en poids, de préférence de 45,00 à 65,00 % en poids, plus préférentiellement de 45,00 à 60,00 % en poids, encore plus préférentiellement de 47,00 à 55,00 % en poids, par rapport au poids sec total de la composition (C), du composé (A).

4. Composition (C) selon l'une quelconque des revendications 1 à 3, dans laquelle le composé (A) est choisi dans le groupe constitué d'une résine alkyde modifiée par du polyuréthane, une résine alkyde modifiée par de l'acrylique et une résine polyuréthane-alkyde modifiée par de l'acrylique.

5. Composition (C) selon l'une quelconque des revendications 1 à 4, dans laquelle l'huile végétale du composé (V) est choisie dans le groupe constitué de l'huile de lin, l'huile de tournesol, l'huile de tung, l'huile de carthame, l'huile de soja, l'huile de pavot, l'huile de tall, l'huile de poisson, l'huile de pépins de raisin, l'huile de graines de lin, l'huile de noix, l'huile de chanvre et l'huile de périlla ; de préférence choisie dans le groupe constitué de l'huile de lin, l'huile de tournesol, l'huile de tung, l'huile de soja, l'huile de pavot, l'huile de tall, l'huile de noix, l'huile de chanvre et l'huile de périlla ; plus préférentiellement choisie dans le groupe constitué de l'huile de lin, l'huile de tournesol, l'huile de tung et l'huile de soja ; encore plus préférentiellement, l'huile végétale est de l'huile de lin.

6. Composition (C) selon l'une quelconque des revendications 1 à 5, dans laquelle le rapport en poids sec entre le composé (V) et le composé (A) va de 0,15 à 0,30, de préférence de 0,20 à 0,28, plus préférentiellement de 0,22 à 0,25.

7. Composition (C) selon l'une quelconque des revendications 1 à 6, dans laquelle la composition (C) comprend de 1,50 à 8,00 % en poids, de préférence de 2,00 à 7,00 % en poids, plus préférentiellement de 2,50 à 7,00 % en poids, plus préférentiellement de 3.00 à 6,50 % en poids, plus préférentiellement de 3,50 à 6,50 % en poids, plus préférentiellement de 3,50 à 6,00 % en poids, par rapport au poids sec total de la composition (C), d'au moins un composé de cellulose.

8. Composition (C) selon l'une quelconque des revendications 1 à 7, dans laquelle ledit au moins un absorbeur UV organique liquide non polaire est choisi parmi les 2-hydroxyphényl-1,3,5-triazines, ou les 2-(2'-hydroxyphényl)-benzotriazoles.

9. Composition (C) selon l'une quelconque des revendications 1 à 8, dans laquelle la composition (C) comprend de 5,00 à 20,00 % en poids, de préférence de 5,00 à 18,00 % en poids, plus préférentiellement de 7,00 à 16,00 % en poids, plus préférentiellement de 9,00 à 15,00 % en poids, encore plus préférentiellement de 10,00 à 14,00 % en poids, par rapport au poids sec total de la composition (C), dudit au moins un absorbeur UV organique non polaire liquide.

10. Composition (C) selon l'une quelconque des revendications 1 à 9, dans laquelle la composition (C) comprend au moins un absorbeur UV organique non polaire solide.

11. Composition (C) selon l'une quelconque des revendications 1 à 10, dans laquelle la composition (C) comprend au moins une cire synthétique micronisée [cire micronisée (Mₚ), ci-après] choisie dans le groupe constitué de la cire de polytétrafluoroéthylène micronisée, de la cire hybride micronisée de polyéthylène-polytétrafluoroéthylène, de la cire de Fischer-Tropsch micronisée, de la cire de polyéthylène micronisée, de la cire de polypropylène micronisée, de la cire de polyamide micronisée, et leurs hybrides polymères micronisés, ladite au moins une cire synthétique micronisée ayant une taille de particules D₉₀ inférieure ou égale à 36 µm et une taille de particules D₅₀ inférieure ou égale à 20 µm.

12. Composition (C) selon l'une quelconque des revendications 1 à 11, dans laquelle la composition (C) comprend au moins un pigment et/ou au moins un ingrédient supplémentaire [ingrédient (I_{C}), ci-après] choisi dans le groupe constitué des retardateurs de flamme, les agents de séchage, les tensioactifs, les absorbeurs UV inorganiques, les stabilisateurs de lumière à base d'amine encombrée (HALS), les dispersants, les agents hydrofuges, les biocides tels que les pesticides, les herbicides, les insecticides, les désherbants, les miticides, les fongicides, les produits anti-moisissures, les algicides, les acaricides, les nématicides, les bactéricides, les rodenticides, les agents mouillants, les plastifiants, les agents antimousse, les agents coalescents, et les parfums.

13. Procédé de fabrication de la composition (C), telle que définie dans les revendications 1 à 9, dans lequel le procédé comprend les étapes suivantes :
- Étape A : ledit au moins un absorbeur UV organique non polaire liquide est d'abord entièrement mélangé avec au moins une partie du composé (V), formant ainsi un premier mélange ;
- Étape B : le premier mélange est ensuite mélangé avec le composé (A), le composé de cellulose, éventuellement de l'eau, et éventuellement la partie restante du composé (V), formant ainsi un deuxième mélange.

14. Procédé selon la revendication 13, dans lequel le procédé comprend en outre une étape (C) dans lequel le deuxième mélange obtenu à l'étape B est mélangé avec un ou plusieurs desdits au moins un des éléments suivants : l'absorbeur UV organique non polaire solide, tel que défini dans la revendication 10, la cire micronisée (Mₚ), telle que définie dans la revendication 11, ledit au moins un pigment, tel que défini dans la revendication 12, et ledit au moins un ingrédient additionnel (I_{C}), tel que défini dans la revendication 12, dans lequel le mélange dudit au moins un absorbeur UV organique non polaire solide est effectué à une température supérieure au point de fusion dudit absorbeur UV organique non polaire solide, et dans lequel le mélange de la cire micronisée (Mₚ) est effectué à une température inférieure au point de fusion de ladite cire micronisée (Mₚ).

15. Procédé de traitement d'une surface ou d'au moins une partie de la surface d'un produit en bois dans lequel ledit produit en bois est traité avec la composition (C) selon l'une quelconque des revendications 1 à 12.

16. Couche de revêtement obtenue par le procédé selon la revendication 15.
